(19) Europäisches Patentamt
European Patent Office
Office européen des brevets

(11) EP 4 694 318 A1

(12) **EUROPEAN PATENT APPLICATION**
published in accordance with Art. 153(4) EPC

(43) Date of publication:
**11.02.2026 Bulletin 2026/07**

(21) Application number: 23931458.6

(22) Date of filing: **06.04.2023**

(51) International Patent Classification (IPC):
**H04W 28/20** (2009.01)   **H04W 28/22** (2009.01)

(52) Cooperative Patent Classification (CPC):
**H04W 24/04; H04W 28/20; H04W 28/22**

(86) International application number:
**PCT/CN2023/086748**

(87) International publication number:
**WO 2024/207390 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventors:
• LI, Yanhua
  **Beijing 100085 (CN)**
• QIAO, Xuemei
  **Beijing 100085 (CN)**

(74) Representative: **Hersina, Günter et al
Schoppe, Zimmermann, Stöckeler
Zinkler, Schenk & Partner mbB
Patentanwälte
Radlkoferstrasse 2
81373 München (DE)**

(54) **INFORMATION PROCESSING METHOD AND APPARATUS, AND COMMUNICATION DEVICE AND STORAGE MEDIUM**

(57)    Provided in embodiments of the present invention are an information processing method and apparatus, and a communication device and a storage medium. The method comprises: sending first information to a terminal, wherein the first information is used for at least one of the following: the terminal determining whether a network device supports or expects the terminal to operate in a first mode, and the terminal determining whether the network device supports or expects the terminal to operate in a second mode. A terminal can operate in a first mode or a second mode according to whether a network device supports or expects same, thereby reducing the occurrence of a situation, such as a communication abnormality, caused by the terminal operating in an operation mode that the network device does not support.

S3501, acquiring first information

FIG. 3e

EP 4 694 318 A1

**Description**

## TECHNICAL FIELD

The invention relates to, but is not limited to, the field of wireless communication technology, in particular to an information processing method, an information processing apparatus, a communication device and a storage medium.

## BACKGROUND

The present 3GPP (3rd Generation Partnership Project) standardization proposes a new terminal type referred to as a reduced capability UE, or abbreviated as a new radio (NR)-lite terminal or a Redcap terminal. The Redcap terminal is similar to an Internet of Things (IoT) device in LTE (long term evolution), and can meet requirements of low cost, low complexity, coverage enhancement and power saving to a certain extent, etc.

## SUMMARY

The present invention provides an information processing method, an information processing apparatus, a communication device, and a storage medium.

In a first aspect, embodiments of the present invention provide an information processing method. The method is performed by a network device and includes: sending first information, in which the first information indicates at least one of: whether a network device supports or expects the terminal to operate in a first mode; or whether a network device supports or expects the terminal to operate in a second mode.

In a second aspect, embodiments of the present invention provide an information processing method. The method is performed by a terminal and includes: acquiring first information, in which the first information indicates at least one of: whether a network device supports or expects the terminal to operate in a first mode; or whether a network device supports or expects the terminal to operate in a second mode.

In a third aspect, embodiments of the present invention provide an information processing method. The method is configured in a communication system and includes: sending, by a network device, first information to a terminal; and receiving, by the terminal, the first information from the network device, in which the first information indicates at least one of: whether the network device supports or expects the terminal to operate in a first mode; or whether the network device supports or expects the terminal to operate in a second mode.

In a fourth aspect, embodiments of the present invention provide a first information processing apparatus. The apparatus includes a first sending module, configured to send first information, in which the first information indicates at least one of: whether a network device supports or expects a terminal to operate in a first mode; or whether a network device supports or expects a terminal to operate in a second mode.

In a fifth aspect, embodiments of the present invention provide a second information processing apparatus. The apparatus includes a first receiving module, configured to receive first information, in which the first information indicates at least one of: whether a network device supports or expects a terminal to operate in a first mode; or whether a network device supports or expects a terminal to operate in a second mode.

In a fifth aspect, embodiments of the present invention provide a communication device. The communication device includes a processor, a transceiver, a memory, and an executable program stored in the memory and capable of being run by the processor. The processor is configured to perform the information processing method as described in the first aspect or the second aspect when running the executable program.

In a sixth aspect, embodiments of the present invention provide a communication system. The communication system includes a terminal and a network device. The terminal is configured to implement the information processing method as described in the first aspect. The network device is configured to implement the information processing method as described in the second aspect.

In a seventh aspect, embodiments of the present invention provide a computer storage medium having an executable program stored thereon. When the executable program is performed by a processor, the information processing method as described in the first aspect or the second aspect may be implemented.

The technical solution provided by embodiments of the present invention should be understood that the above general description and the following detailed description are merely exemplary and explanatory, and do not constitute the limitation on embodiments of the present invention.

## BRIEF DESCRIPTION OF THE DRAWINGS

The drawings herein are incorporated into the specification and constitute a part of the specification, show embodiments in conformity with embodiments of the present invention, and explain the principle of the present invention together with the specification.

FIG. 1 is a schematic diagram illustrating an architecture of a communication system according to an embodiment.

FIG. 2 is a schematic diagram illustrating an interaction of an information processing method according to an embodiment.

FIG. 3a is a flowchart illustrating an information processing method according to an embodiment.

FIG. 3b is a flowchart illustrating an information processing method according to an embodiment.

FIG. 3c is a flowchart illustrating an information processing method according to an embodiment.

FIG. 3d is a flowchart illustrating an information processing method according to an embodiment.

FIG. 3e is a flowchart illustrating an information processing method according to an embodiment.

FIG. 4a is a flowchart illustrating an information processing method according to an embodiment.

FIG. 4b is a flowchart illustrating an information processing method according to an embodiment.

FIG. 5 is a flowchart illustrating an information processing method according to an embodiment.

FIG. 6 is a flowchart illustrating an information processing method according to an embodiment.

FIG. 7a is a schematic diagram illustrating an architecture of a second information processing apparatus according to an embodiment.

FIG. 7b is a schematic diagram illustrating an architecture of a first information processing apparatus according to an embodiment.

FIG. 8a is a schematic diagram illustrating an architecture of a communication device according to an embodiment.

FIG. 8b is a schematic diagram illustrating an architecture of a chip according to an embodiment.

## DETAILED DESCRIPTION

Embodiments of the present invention standardize operating modes of terminals. Network devices may have a plurality of operating modes, and some network devices may support or expect to operate in a specific operating mode. The operating mode of the terminal being not compatible with the operating mode of the network device may result in communication abnormality.

Embodiments of the present invention provide an information processing method, a first information processing apparatus, a second information processing apparatus, a communication device, a communication system and a storage medium.

In a first aspect, embodiments of the present invention provide an information processing method. The method is performed by a network device and includes: sending first information, in which the first information indicates at least one of: whether a network device supports or expects the terminal to operate in a first mode; or whether a network device supports or expects the terminal to operate in a second mode.

In the above embodiment, support or expectation of the network device for the terminal may be informed the terminal through the first information, thus, situations such as the communication abnormality resulted by the terminal operating in an operating mode not supported by the network device may be reduced.

In combination with some embodiments of the first aspect, in some embodiments, a peak rate of the terminal operating in the second mode is higher than a peak rate of the terminal operating in the first mode, and/or a baseband bandwidth for a first channel supported by the terminal operating in the second mode is greater than a baseband bandwidth for the first channel supported by the terminal operating in the first mode.

The terminal and the network device operating in the second mode may communicate with a larger baseband bandwidth or a higher peak rate, while when operating in the first mode, the terminal and/or the network device operating in the first mode may save power consumption of the terminal and/or the network device.

In the above embodiment, the network device sends the first information to the terminal. The terminal may determine, according to the first information, which mode the network device supports or expects the terminal to operate in. In a case of the terminal operating in the first mode, demands for the reduced or increased peak rate, and/or the smaller baseband bandwidth may be achieved, thus saving power consumption.

In combination with some embodiments of the first aspect, in some embodiments, the first information includes at least one of: a second parameter, in which a value of the second parameter indicates that the terminal supports the first mode or the second mode; a first field, in which the first field indicates whether the network device supports or expects the terminal to operate in the first mode; or a second field, in which the second field indicates whether the network device supports or expects the terminal to operate in the second mode.

In the above embodiment, the first information includes at least one of the second parameter, the first field or the second field, flexibility of transmission of the first information may be improved, which may facilitate the network device to select any combination of the second parameter, the first field and the second field as needed to flexibly transmit the first information.

In combination with some embodiments of the first aspect, in some embodiments, sending the first information includes at least one of: sending a system message, in which the system message includes the first information; or sending a dedicated message, in which the dedicated message includes the first information.

In the above embodiment, the terminal may receive the system message broadcast by the network device in a RRC connected state and/or a RRC non-connected state. The system message may be received by all terminals in a cell. In this way, the first information is carried in the system message. On the one hand, the terminal may receive the first information without switching the RRC state. On the other hand, all terminals in need in the cell may receive the first information, and the network device does not need to send the first information to a terminal group or a single terminal.

The dedicated message may realize precise control over a single terminal and may realize sending of the first information to the single terminal.

In combination with some embodiments of the first aspect, in some embodiments, the method further includes: acquiring second information, in which the second information indicates at least one of: whether the terminal has a capability of operating in the second mode; or whether the terminal supports or expects to operate in the second mode.

In the above embodiment, the second information reported by the terminal may facilitate the network device to select the operating mode supported by the terminal according to a communication requirement and/or a system capacity, and control the terminal to operate in the first mode or the second mode.

In combination with some embodiments of the first aspect, in some embodiments, the second information indicates at least one of: whether the terminal has a capability of operating in the second mode after initial access; or whether the terminal supports or expects to operate in the second mode after initial access.

In the above embodiment, according to the second information, the network device may conveniently decide whether to indicate that the terminal operates in the second mode according to the communication requirement and/or the system capacity.

In combination with some embodiments of the first aspect, in some embodiments, acquiring the second information includes: acquiring the second information reported by the terminal in a connected state.

In the above embodiment, the network device may receive the second information reported by the terminal in the connected state, but may not receive the second information reported by the terminal in a non-connected state, thus reducing instruction consumption and saving power consumption.

In combination with some embodiments of the first aspect, in some embodiments, acquiring the second information includes at least one of: acquiring capability information (UE capability information), in which the capability information indicates that the terminal has the capability of operating in the second mode; or acquiring assistance information (UAI, user assistance information), in which the UAI indicates whether the terminal supports or expects to operate in the second mode.

In the above embodiment, the capability information and/or the assistance information UAI reported by the terminal may facilitate the network device to control the terminal to operate in the first mode or the second mode according to the communication requirement and/or the system capacity.

In the above embodiment, the capability information may indicate various capabilities of the reporting terminal. In this way, the capability information is used to report whether the terminal supports the second mode, without constructing a new message signaling or a new field to report whether the terminal supports to operate in the second mode.

In combination with some embodiments of the first aspect, in some embodiments, the second information includes at least one of: a first parameter, in which a value of the first parameter indicates that the terminal supports the first mode or the second mode; a third field, in which the third field indicates whether the terminal supports or expects to operate in the second mode; a fourth field, in which the fourth field indicates whether the terminal supports a bandwidth on which the terminal operates in the second mode; or a fifth field, in which the fifth field indicates whether the terminal supports peak rate reduction or increase.

In the above embodiment, the network device may determine, according to the value of the first parameter, the support of the terminal for the peak rate reduction or increase, thus facilitating the network device to control the terminal to operate in the first mode or the second mode.

The second information includes at least one of the first parameter, the third field, the fourth field or the fifth field, which may improve flexibility of transmission of the second information, and the first information may be flexibly transmitted through any combination of the first parameter, the third field, the fourth field or the fifth field.

In a second aspect, embodiments of the present invention provide an information processing method. The method is performed by a terminal and includes: acquiring first information, in which the first information indicates at least one of: whether a network device supports or expects the terminal to operate in a first mode; or whether a network device supports or expects the terminal to operate in a second mode.

In the above embodiment, the terminal may operate in the first mode or the second mode according to support or expectation of the network device, thus, situations such as the communication abnormality resulted by the terminal operating in an operating mode not supported by the network device may be reduced.

In combination with some embodiments of the second aspect, in some embodiments, a peak rate of the terminal operating in the second mode is higher than a peak rate of the terminal operating in the first mode, and/or a baseband bandwidth for a first channel supported by the terminal operating in the second mode is greater than a baseband bandwidth for the first channel supported by the terminal operating in the first mode.

In the above embodiment, the terminal and the network device operating in the second mode may communicate with a larger baseband bandwidth or a higher peak rate, while when operating in the first mode, the terminal and/or the network device operating in the first mode may save power consumption of the terminal and/or the network device.

The terminal acquires the first information from the network device. The terminal may determine, according to the first information, which mode the network device supports or expects the terminal to operate in. In a case of the terminal operating in the first mode, demands for the reduced or increased peak rate, and/or the smaller baseband bandwidth may be achieved, thereby saving power.

In combination with some embodiments of the second aspect, in some embodiments, the method further includes at least one of: determining, according to the first information, whether the network device supports or expects the terminal to operate in the first mode; determining, according to the first information, whether the network device supports or expects the terminal to operate in the second mode.

In the above embodiment, the terminal may operate in the first mode or the second mode according to the support or expectation of the network device, thus, situations such as the communication abnormality resulted by the terminal operating in an operating mode not supported by the network device may be reduced.

In combination with some embodiments of the second aspect, in some embodiments, the method further includes at least one of: determining that the terminal operates in the first mode where the first information indicates that the network device supports or expects the terminal to operate in the first mode; or determining that the terminal operates in the second mode where the first information indicates that the network device does not support the terminal to operate in the first mode, and the first information indicates that the network device supports the terminal to operate in the second mode.

In the above embodiment, the first information indicates that the network device supports the terminal to operate in the first mode, and the terminal may select to operate in the first mode. The first information indicates that the network device does not support the terminal to operate in the first mode, and the network device supports the terminal to operate in the second mode, and the terminal may select to operate in the second mode. That is, in a case where the network device supports the terminal to operate in the first mode and/or the second mode simultaneously, the terminal may preferentially select to operate in the first mode, which is more conducive to saving power consumption.

In combination with some embodiments of the second aspect, in some embodiments, the method further includes: determining that the terminal operates in the second mode where the first information indicates that the network device does not support the terminal to operate in the first mode, and the first information indicates that the network device supports or expects the terminal to operate in the second mode, and the terminal has a capability of operating in the second mode.

In the above embodiment, in a case where the network device does not support the terminal to operate in the first mode, and the network device supports the terminal to operate in the second mode, the terminal may select to operate the second mode based on its own capability of operating in the second mode, to acquire a larger baseband bandwidth or a higher peak rate for communication.

In combination with some embodiments of the second aspect, in some embodiments, the method further includes: determining whether the terminal in a non-connected state accesses to a target cell, in which the target cell is a cell that supports the terminal to operate in the second mode.

In the above embodiment, in the non-connected state, the terminal may determine whether to access the target cell by itself and then decide whether to operate in the second mode without reporting an indication, which may reduce a signaling overhead of the terminal.

In combination with some embodiments of the second aspect, in some embodiments, the method further includes: the terminal operating in the first mode during an initial access process, and maintaining operating in the first mode after completing the initial access process; the terminal operating in the second mode during an initial access process, and switching to operating in the first mode after completing the initial access process; or the terminal operating in the first mode during an initial access process, and switching to operating in the second mode after completing the initial access process.

In the above embodiment, after the terminal is powered on or exits a flight mode, the terminal may select the first mode to enter the network with a lower peak rate or a smaller baseband bandwidth, and after accessing the network, the terminal may maintain operating in the first mode or switch to the second mode according to the first information received. Alternatively, after the terminal is powered on or exits the flight mode, the terminal may select the second mode to enter the network with a higher peak rate or a larger baseband bandwidth, and after accessing the network, the terminal may switch to the first mode to reduce power consumption.

The terminal may flexibly select to operate in the first mode or the second mode according to the support or expectation of the network device and the needs of the terminal itself, which may meet the requirements of the terminal in different usage scenarios.

In combination with some embodiments of the second aspect, in some embodiments, the first information includes at least one of: a second parameter, in which a value of the second parameter indicates that the terminal supports the first mode or the second mode; a first field, in which the first field indicates whether the network device supports or expects the terminal to operate in the first mode; or a second field, in which the second field indicates whether the network device supports or expects the terminal to operate in the second mode.

In the above embodiment, the first information includes at least one of the first field or the second field, flexibility of transmission of the first information may be improved, which may facilitate the network device to select any combination of the first field and the second field as needed to flexibly transmit the first information.

In combination with some embodiments of the second aspect, in some embodiments, receiving the first information includes at least one of: receiving a system message, in which the system message includes the first information; or receiving a dedicated message, in which the dedicated message includes the first information.

In the above embodiment, the terminal may receive the system message broadcast by the network device in a RRC connected state and/or a RRC non-connected state. The system message may be received by all terminals in a cell. In this way, the first information is carried in the system message. On the one hand, the terminal may receive the second information without switching the RRC state. On the other hand, all terminals in need in the cell may receive the second information, and the network device does not need to send the second information to a terminal group or a single terminal.

The dedicated message may realize precise control over a single terminal and may realize sending of the first information to the single terminal.

In combination with some embodiments of the second aspect, in some embodiments, the method further includes: sending second information, in which the second information indicates at least one of: whether the terminal has a capability of operating in the second mode; or whether the terminal supports or expects to operate in the second mode.

In the above embodiment, the second information reported by the terminal may facilitate the network device to select the operating mode supported by the terminal according to a communication requirement and/or a system capacity, and control the terminal to operate in the first mode or the second mode.

In combination with some embodiments of the second aspect, in some embodiments, the second information indicates at least one of: whether the terminal has a capability of operating in the second mode after initial access; or whether the terminal supports or expects to operate in the second mode after initial access.

In combination with some embodiments of the second aspect, in some embodiments, sending the second information to the network device includes: reporting the second information to the network device in a connected state.

In the above embodiment, the terminal may report the second information in the connected state, but may not report the second information in a non-connected state, thus reducing instruction consumption and saving power consumption.

In combination with some embodiments of the second aspect, in some embodiments, the second information includes at least one of: a first parameter, in which a value of the first parameter indicates that the terminal supports the first mode or the second mode; a third field, in which the third field indicates whether the terminal supports or expects to operate in the second mode; a fourth field, in which the fourth field indicates whether the terminal supports a bandwidth on which the terminal operates in the second mode; or a fifth field, in which the fifth field indicates whether the terminal supports peak rate reduction or increase.

In the above embodiment, the second information includes at least one of the first parameter, the third field, the fourth field or the fifth field, which may improve the flexibility of the transmission of the second information, and the first information may be flexibly transmitted through any combination of the first parameter, the third field, the fourth field and the fifth field.

In a third aspect, embodiments of the present invention provide an information processing method. The method is configured in a communication system and includes: sending, by a network device, first information to a terminal; and receiving, by the terminal, the first information from the network device, in which the first information indicates at least one of: whether the network device supports or expects the terminal to operate in a first mode; or whether the network device supports or expects the terminal to operate in a second mode.

In the above embodiment, the terminal may operate in the first mode or the second mode according to support or expectation of the network device, thus, situations such as the communication abnormality resulted by the terminal operating in an operating mode not supported by the network device may be reduced.

In combination with some embodiments of the third aspect, in some embodiments, a peak rate of the terminal operating in the second mode is higher than a peak rate of the terminal operating in the first mode, and/or a baseband bandwidth for a first channel supported by the terminal operating in the second mode is greater than a baseband bandwidth for the first channel supported by the terminal operating in the first mode.

In the above embodiment, the terminal and the network device operating in the second mode may communicate with a larger baseband bandwidth or a higher peak rate, while when operating in the first mode, the terminal and/or the network device operating in the first mode may save power consumption of the terminal and/or the network device.

The network device sends the first information to the terminal. The terminal may determine, according to the first information, which mode the network device supports or expects the terminal to operate in. In a case of the terminal operating in the first mode, demands for the reduced or increased peak rate, and/or the smaller baseband bandwidth may be achieved, thus saving power consumption.

In a fourth aspect, embodiments of the present invention provide a first information processing apparatus. The apparatus includes a first sending module, configured to send first information, in which the first information indicates at least one of: whether a network device supports or expects a terminal to operate in a first mode; or whether a network device supports or expects a terminal to operate in a second mode.

In combination with some embodiments of the fourth aspect, in some embodiments, a peak rate of the terminal operating in the second mode is higher than a peak rate of the terminal operating in the first mode, and/or a baseband bandwidth for a first channel supported by the terminal operating in the second mode is greater than a baseband bandwidth for the first channel supported by the terminal operating in the first mode.

In combination with some embodiments of the fourth aspect, in some embodiments, the first information includes at least one of: a first field, in which the first field indicates whether the network device supports or expects the terminal to operate in the first mode; or a second field, in which the second field indicates whether the network device supports or expects the terminal to operate in the second mode.

In combination with some embodiments of the fourth aspect, in some embodiments, the apparatus includes a second receiving module, configured to acquire second information, in which the second information indicates at least one of: whether the terminal has a capability of operating in the second mode; or whether the terminal supports or expects to operate in the second mode.

In combination with some embodiments of the fourth aspect, in some embodiments, the second information indicates at least one of: whether the terminal has a capability of operating in the second mode after initial access; or whether the terminal supports or expects to operate in the second mode after initial access.

In combination with some embodiments of the fourth aspect, in some embodiments, the second receiving module is further configured to acquire the second information reported by the terminal in a connected state.

In combination with some embodiments of the fourth aspect, in some embodiments, the second receiving module is further configured to perform at least one of: acquiring capability information, in which the capability information indicates that the terminal has the capability of operating in the second mode; or acquiring assistance information (UAI), in which the UAI indicates whether the terminal supports or expects to operate in the second mode.

In combination with some embodiments of the fourth aspect, in some embodiments, the second information includes at least one of: a first parameter, in which a value of the first parameter indicates that the terminal supports the first mode or the second mode; a third field, in which the third field indicates whether the terminal supports or expects to operate in the second mode; a fourth field, in which the fourth field indicates whether the terminal supports a bandwidth on which the terminal operates in the second mode; or a fifth field, in which the fifth field indicates whether the terminal supports peak rate reduction or increase.

In a fifth aspect, embodiments of the present invention provide a second information processing apparatus. The apparatus includes a first receiving module, configured to receive first information, in which the first information indicates at least one of: whether a network device supports or expects a terminal to operate in a first mode; or whether a network device supports or expects a terminal to operate in a second mode.

In combination with some embodiments of the fifth aspect, in some embodiments, the first information indicates at least one of: whether a network device supports or expects a terminal to operate in a first mode; or whether a network device supports or expects a terminal to operate in a second mode.

In combination with some embodiments of the fifth aspect, in some embodiments, the first receiving module is further configured to perform at least one of: determining, according to the first information, whether the network device supports or expects the terminal to operate in the first mode; or determining, according to the first information, whether the network device supports or expects the terminal to operate in the second mode.

In combination with some embodiments of the fifth aspect, in some embodiments, a peak rate of the terminal operating in the second mode is higher than a peak rate of the terminal operating in the first mode, and/or a baseband bandwidth for a first channel supported by the terminal operating in the second mode is greater than a baseband bandwidth for the first channel supported by the terminal operating in the first mode.

In combination with some embodiments of the fifth aspect, in some embodiments, the second information processing apparatus further includes at least one of: a first determination module, configured to determine that the terminal operates in the first mode where the first information indicates that the network device supports or expects the terminal to operate in the first mode; or a second determination module, configured to determine that the terminal operates in the second mode where the first information indicates that the network device does not support the terminal to operate in the first mode, and the first information indicates that the network device supports the terminal to operate in the second mode.

In combination with some embodiments of the fifth aspect, in some embodiments, the second determination module is configured to determine that the terminal operates in the second mode where the first information indicates that the network device does not support the terminal to operate in the first mode, and the first information indicates that the network device supports or expects the terminal to operate in the second mode, and the terminal has a capability of operating in the second mode.

In combination with some embodiments of the fifth aspect, in some embodiments, the second information processing apparatus further includes a third determination module, configured to determine whether the terminal in a non-connected state accesses to a target cell, in which the target cell is a cell that supports the terminal to operate in the second mode.

In combination with some embodiments of the fifth aspect, in some embodiments, the second information processing apparatus further includes at least one of: a first processing module, configured to perform the terminal operating in the first mode during an initial access process, and maintaining operating in the first mode after completing the initial access process; a second processing module, configured to perform the terminal operating in the second mode during an initial access process, and switching to operating in the first mode after completing the initial access process; or a third processing module, configured to perform the terminal operating in the first mode during an initial access process, and switching to operating in the second mode after completing the initial access process.

In combination with some embodiments of the fifth aspect, in some embodiments, the first information includes at least one of: a second parameter, in which a value of the second parameter indicates that the terminal supports the first mode or the second mode; a first field, in which the first field indicates whether the network device supports or expects the terminal to operate in the first mode; or a second field, in which the second field indicates whether the network device supports or expects the terminal to operate in the second mode.

In combination with some embodiments of the fifth aspect, in some embodiments, the first receiving module is configured to perform at least one of: acquiring a system message, in which the system message includes the first information; or acquiring a dedicated message, in which the dedicated message includes the first information.

In combination with some embodiments of the fifth aspect, in some embodiments, the apparatus further includes a second sending module, configured to send second information, in which the second information indicates at least one of: whether the terminal has a capability of operating in the second mode; or whether the terminal supports or expects to operate in the second mode.

In combination with some embodiments of the fifth aspect, in some embodiments, the second sending module is configured to send the second information by the terminal in a connected state.

In combination with some embodiments of the fifth aspect, in some embodiments, the second information indicates at least one of: whether the terminal has a capability of operating in the second mode after initial access; or whether the terminal supports or expects to operate in the second mode after initial access.

In combination with some embodiments of the fifth aspect, in some embodiments, the second information includes at least one of: a first parameter, in which a value of the first parameter indicates that the terminal supports the first mode or the second mode; a third field, in which the third field indicates whether the terminal supports or expects to operate in the second mode; a fourth field, in which the fourth field indicates whether the terminal supports a bandwidth on which the terminal operates in the second mode; or a fifth field, in which the fifth field indicates whether the terminal supports peak rate reduction or increase.

In a sixth aspect, embodiments of the present invention provide a communication device. The communication device includes a processor, a transceiver, a memory, and an executable program stored in the memory and capable of being run by the processor. The processor is configured to perform the information processing method as described in the first aspect or the second aspect when running the executable program.

In a seventh aspect, embodiments of the present invention provide a communication system. The communication system includes a terminal and/or a network device. The terminal is configured to implement the information processing method as described in the first aspect. The network device is configured to implement the information processing method as described in the second aspect.

In an eighth aspect, an embodiment of the present invention proposes a storage medium having instructions stored thereon. When the instructions are performed on a communication device, the communication device is caused to perform the information processing method as described in any one of the first aspect and the second aspect.

In a ninth aspect, an embodiment of the present invention proposes a program product which, when performed by a communication device, causes the communication device to perform the method as described in the optional implementation of the first aspect and/or the second aspect.

In a tenth aspect, an embodiment of the present invention proposes a computer program which, when performed on a computer, causes the computer to perform the method as described in as described in the optional implementation of the first aspect and/or the second aspect and/or the third aspect.

It is understandable that the first information processing apparatus, the second information processing apparatus, the communication device, the communication system, the storage medium, the program product, and the computer program are all configured to perform the method proposed in embodiments of the present invention. Therefore, for beneficial effects that may be achieved by the first information processing apparatus, the second information processing apparatus, the communication device, the communication system, the storage medium, the program product, and the computer program, reference may be made to the beneficial effects of the corresponding method, and details are not repeated herein.

The present invention proposes an information processing method, an information processing apparatus, a communication device and a storage medium. In some embodiments, terms such as information processing method and communication method, etc. may be replaced with each other, terms such as information processing apparatus and communication apparatus, etc. may be replaced with each other, and terms such as information processing system, communication system, etc. may be replaced with each other.

The embodiments of the present invention are not exhaustive, but are only illustrative of some embodiments, and are not intended to be a specific limitation on the scope of protection of the present invention. In the absence of contradiction, each step in a certain embodiment may be implemented as an independent embodiment, and respective steps may be arbitrarily combined. For example, a solution after removing some steps in a certain embodiment can also be implemented as an independent embodiment, and an order of the steps in a certain embodiment may be arbitrarily exchanged. In addition, optional implementations in a certain embodiment may be arbitrarily combined. In addition, respective embodiments may be arbitrarily combined with other, for example, some or all steps of different embodiments may be arbitrarily combined, and a certain embodiment may be arbitrarily combined with the optional implementations of other embodiments.

In each embodiment of the present invention, unless otherwise specified or there is a logical conflict, the terms and/or descriptions between embodiments are consistent and may be referenced to each other, and the technical features in different embodiments may be combined to form a new embodiment based on their internal logical relationships.

The terms used in embodiments of the present invention are only for the purpose of describing specific embodiments and are not intended to limit the present invention.

In embodiments of the present invention, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, a noun after the article may be understood as a singular expression or a plural expression.

In embodiments of the present invention, "a plurality of" refers to two or more.

In some embodiments, the terms "at least one of", "one or more", "a plurality of", "multiple", etc. may be used interchangeably.

In embodiments of the present invention, descriptions such as "at least one of A, B, C...", "A and/or B and/or C...", etc. include a situation where any one of A, B, C... exists alone, and also include a situation where any combination of any multiple ones of A, B, C, and each situation can exist alone. For example, "at least one of A, B, C" includes a situation where A exists alone, a situation where B exists alone, a situation where C exists alone, a combination of A and B, a combination of A and C, a combination of B and C, and a combination of A, B and C. For example, A and/or B includes a situation where A exists alone, a situation where B exists alone, and a combination of A and B.

In some embodiments, the descriptions such as "in one case, A; in another case, B", "in response to one case, A; in response to another case, B", etc. may include the following technical solutions according to situations: A is executed independently of B, that is, in some embodiments, A; B is executed independently of A, that is, in some embodiments, B; A and B are selectively executed, that is, in some embodiments, one is selected from A and B to be executed; both A and B are executed, that is, in some embodiments, A and B. When there are more branches such as A, B, C, etc., the above is applicable.

The prefixes such as "first" and "second" in embodiments of the present invention are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and may be one or more. Taking the "first apparatus" as an example, the number of "apparatuses" may be one or more. In addition, the objects modified by different prefixes may be the same or different. For example, if the descriptive object is "apparatus", the "first apparatus" and the "second apparatus" may be the same apparatus or different apparatuses, and their types may be the same or different. For another example, if the descriptive object is "information", the "first information" and the "second information" may be the same information or different information, and their contents may be the same or different.

In some embodiments, "including A", "comprising A", "used to indicate A", and "carrying A" may be interpreted as directly carrying A or indirectly indicating A.

In some embodiments, terms such as "in response to ...", "in response to determining ...", "in a case of ...", "upon", "when", "if", "in case of", etc. may be used interchangeably.

In some embodiments, terms such as "greater than", "greater than or equal to", "not less than", "more than", "more than or equal to", "not less than", "higher than", "higher than or equal to", "not lower than", and "above" may be replaced with each other, and terms such as "less than", "less than or equal to", "not greater than", "less than", "less than or equal to", "no more than", "lower than", "lower than or equal to", "not higher than", and "below" may be replaced with each other.

In some embodiments, the apparatus, etc. may be interpreted as physical or virtual, and their names are not limited to the names mentioned in the embodiments, and terms such as "apparatus", "equipment", "device", "circuit", "network element", "node", "function", "unit", "section", "system", "network", "chip", "chip system", "entity", and "subject" and the like may be used interchangeably.

In some embodiments, terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced by the terminal. For example, various embodiments of the present invention can also be applied to a structure in which communication between the access network device, the core network device, or the network device and the terminal is replaced by communication between multiple terminals (for example, also be referred to as device-to-device (D2D), vehicle-to-everything (V2X), etc.). In this case, the terminal can also be configured to have a structure that has all or part of the functions of the access network device. In addition, language such as "uplink" and "downlink" can also be replaced by the language corresponding to the communication between the terminals (for example, "side"). For example, an uplink channel, a downlink channel, etc. may be replaced by a side channel, and an uplink, a downlink, etc. may be replaced by a side link.

In some embodiments, the terminal may be replaced by the access network device, the core network device, or the network device. In this case, the access network device, the core network device, or the network device may also be configured to have a structure that has all or part of the functions of the terminal.

In some embodiments, a name of information, etc. is not limited to names mentioned in the embodiments, and terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" and the like may be used interchangeably.

In some embodiments, terms such as "uplink", "up link", "physical uplink" may be interchangeable, and terms such as "downlink", "down link", "physical downlink" may be interchangeable, and terms such as "side", "sidelink", "side communication", "sidelink communication", "direct connection", "direct link", "direct communication", "direct link communication" and the like may be interchangeable.

In some embodiments, terms "downlink control information (DCI)", "downlink (DL) assignment", "DL DCI", "uplink (UL) grant", "UL DCI" and the like may be used interchangeably.

In some embodiments, terms such as "physical downlink shared channel (PDSCH)", "DL data" and the like may be interchangeable, and terms such as "physical uplink shared channel (PUSCH)", "UL data" and the like may be interchangeable.

In some embodiments, terms such as "radio", "wireless", "radio access network (RAN)", "access network (AN)", "RAN-based" and the like may be used interchangeably.

In some embodiments, the terms "search space", "search space set", "search space configuration", "search space set configuration", "control resource set (CORESET)", "CORESET configuration" and the like may be interchangeable.

In some embodiments, terms such as "synchronization signal (SS)", "synchronization signal block (SSB)", "reference signal (RS)", "pilot", "pilot signal" and the like may be used interchangeably.

In some embodiments, the terms such as "moment", "time point", "time", "time position" and the like may be interchangeable, and the terms such as "duration", "period", "time window", "window", "time" and the like may be interchangeable.

In some embodiments, the terms "component carrier (CC)", "cell", "frequency carrier", "carrier frequency" and the like may be used interchangeably.

In some embodiments, terms such as "resource block (RB)", "physical resource block (PRB)", "sub-carrier group (SCG)", "resource element group (REG)", "PRB pair", "RB pair", "resource element (RE)" and the like may be used interchangeably.

In some embodiments, the terms such as "wireless access scheme", "waveform", etc. may be used interchangeably.

In some embodiments, the terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel" and the like may be used interchangeably.

In some embodiments, the terms such as "frame", "radio frame", "subframe", "slot", "sub-slot", "mini-slot", "symbol", "symbol", "transmission time interval (TTI)" and so on may be used interchangeably.

In some embodiments, "obtain", "acquire", "get", "receive", "transmit", "send and/or receive" may be interchangeable, and may be interpreted as receiving from other entities, obtaining from a protocol, obtaining by self-processing, autonomous implementation, etc.

In some embodiments, the terms such as "send", "report", "issue", "transmit", "send and/or receive" and the like may be used interchangeably.

In some embodiments, "predetermined" or "preset" may be interpreted as being pre-specified in a protocol, etc., or may be interpreted as an apparatus performing a pre-set action, etc.

In some embodiments, "determining" may be interpreted as "judging", "deciding", "judging", "calculating", "computing", "processing", "deriving", "investigating", "searching", "looking up", "searching", "inquiring", "ascertaining", "receiving", "transmitting", "inputting", "outputting, "accessing", "resolving", "selecting", "choosing", "establishing", "comparing", "assuming", "expecting", "considering", "broadcasting", "notifying", "communicating", "forwarding", "configuring", "reconfiguring", "allocating", "mapping", "assigning", etc., but is not limited to the above.

In some embodiments, the determination or judgment may be performed by a value represented by 1 bit (0 or 1), or by a true/false value (Boolean value) represented by true or false, or by comparison of numerical values (for example, comparison with a predetermined value), but is not limited thereto.

In some embodiments, "network" may be interpreted as apparatuses included in the network (e.g., access network device, core network device, etc.).

In some embodiments, "not expecting to receive" may be interpreted as not receiving on time domain resources and/or frequency domain resources, or as not performing subsequent processing on the data after receiving the data; "not expecting to send" may be interpreted as not sending, or as sending but not expecting the recipient to respond to the sent content.

In some embodiments, acquisition of data, information, etc. may comply with the laws and regulations of the country where the data is obtained.

In some embodiments, data, information, etc. may be obtained with the user's consent.

In addition, each element, each row, or each column in the table of embodiments of the present invention may be implemented as an independent embodiment, and the combination of any elements, any rows, or any columns may also be implemented as an independent embodiment.

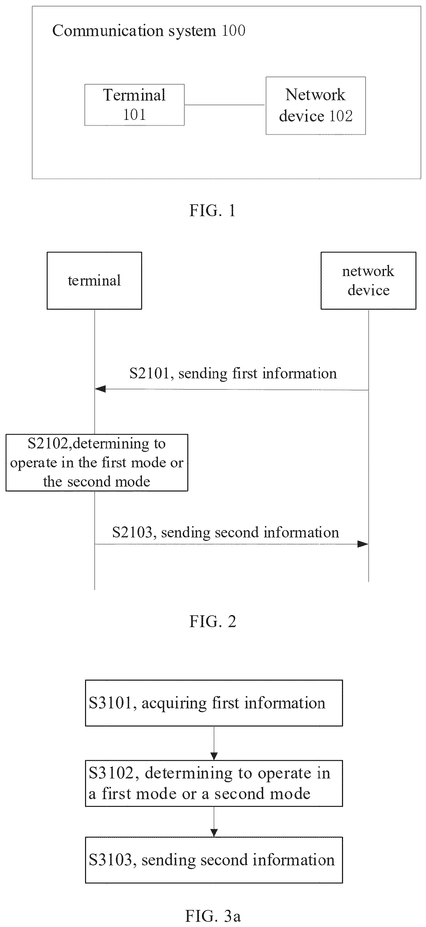

FIG. 1 is a schematic diagram illustrating an architecture of a communication system according to an embodiment of the present invention.

As illustrated in FIG. 1, the communication system 100 may include a terminal 101 and/or a network device 102.

In some embodiments, the terminal 101 (also referred to as user equipment, UE), for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited thereto.

The network device includes at least one of: one or more access network devices; or one or more core network devices.

In some embodiments, the access network device 102 may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited thereto.

In some embodiments, the technical solution of the present invention may be applicable to an Open RAN architecture. In this case, the interfaces between or within the access network devices involved in embodiments of the present invention may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited thereto.

In some embodiments, in some embodiments, the core network device may be one device including one or more network elements, or may be a plurality of devices or a device group, each including all or part of the one or more network elements. The network element may be virtual or physical. The core network may include, for example, at least one of an evolved packet core (EPC), a 5G core network (5GCN), and a next generation core (NGC).

The network device 102 and/or the terminal 101 may establish a wireless connection via a wireless air interface. In different implementations, the wireless air interface may be a wireless air interface based on the fourth generation mobile communication network technology (4G) standard; or, the wireless air interface may also be a wireless air interface based on the fifth generation mobile communication network technology (5G) standard, for example, the wireless air interface is a new radio; or, the wireless air interface may also be a wireless air interface based on the next generation mobile communication network technology standard of 5G.

It may be understood that the communication system described in embodiments of the present invention aims to more clearly illustrate the technical solution of embodiments of the present invention, and does not constitute a limitation on the technical solution proposed in embodiments of the present invention. A person skilled in the art can know that with the evolution of the system architecture and the emergence of new business scenarios, the technical solution proposed in embodiments of the present invention are also applicable to similar technical problems.

The following embodiments of the present invention may be applied to the communication system 100 or part of the subjects shown in FIG. 1, but are not limited thereto. The subjects shown in FIG. 1 are examples, and the communication system may include all or part of the subjects in FIG. 1, or may include other subjects other than those shown in FIG. 1, and the number and form of the subjects are arbitrary, and the connection relationships between the subjects are examples, and the subjects may be connected or disconnected, and the connection may be in any manner, which may be a direct connection or an indirect connection, and may be a wired connection or a wireless connection.

The embodiments of the present invention may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems can also be combined (for example, a combination of LTE or LTE-A and 5G, etc.) for application.

FIG. 2 is a schematic diagram illustrating an interaction of an information processing method according to an embodiment. As illustrated in FIG. 2, an embodiment of the present invention relates to an information processing method configured in a communication system 100. The method includes the following step.

At step S2101, a network device 102 sends first information to a terminal 101.

In some embodiments, the terminal 101 receives the first information from the network device 102.

In some embodiments, the first information indicates that the terminal determines whether the network device supports or expects the terminal to operate in a first mode;

In some embodiments, the first information indicates that the terminal determines whether the network device supports or expects the terminal to operate in a second mode.

The first mode and the second mode may be different operating modes of the terminal.

In some embodiments, a peak rate of the terminal operating in the second mode is higher than a peak rate of the terminal operating in the first mode.

In some embodiments, a baseband bandwidth for a first channel supported by the terminal operating in the second mode is greater than a baseband bandwidth for the first channel supported by the terminal operating in the first mode.

The first channel includes, but is not limited to, a data channel. The data channel may include, but is not limited to, a physical downlink shared channel (PDCCH) and/or a physical uplink shared channel (PUSCH).

In some embodiments, the peak rate may include a maximum sending rate and/or a maximum receiving rate.

In some embodiments, the peak rate may be a maximum sending rate and/or a maximum receiving rate for a baseband transmission.

In some embodiments, the first mode supports a 20 MHz bandwidth for a radio frequency (RF), supports a 20 MHz bandwidth for a control channel, and supports a 5 MHz bandwidth for a data channel. The second mode supports a 20 MHz bandwidth only for the RF, supports a 20 MHz bandwidth for the control channel, and supports a 20 MHz bandwidth for the data channel.

In some embodiments, the first information may indicate a mode in which a serving cell and/or a neighboring cell of the terminal supports or expects the terminal to operate. The mode may include a first mode and/or a second mode.

In some embodiments, the first information includes a second parameter.

In some embodiments, the first information includes a first field.

In some embodiments, the first information includes a second field.

The first field indicates whether the network device supports or expects the terminal to operate in the first mode. The second field indicates whether the network device supports or expects the terminal to operate in the second mode.

In some embodiments, the first information may be carried by any one of the first field or the second field.

The first field carries mode information, and the mode information may include: a mode identifier, etc. The first field may include one or more bits. The first field carries information about the first mode, that is, the first field indicates that the terminal supports or expects to operate in the first mode. The first field carries information about the second mode, that is, the first field indicates that the terminal supports or expects to operate in the second mode.

The second field may carry a maximum supported bandwidth or an expected operating bandwidth of the network device. For example, the second field may carry a supported baseband bandwidth or an expected operating baseband bandwidth for the first channel using by the terminal. Therefore, the terminal can know the baseband bandwidth supported or expected to operate by the network device according to the second field, so that the terminal knows which operating mode the network device supports or expects the terminal to operate in.

As an embodiment, the network device may send "Rel-17 Redcap support". The "Rel-17 Redcap support" indicates whether the network device supports the terminal to operate in the first mode. Or, the "Rel-17 Redcap support" indicates whether the network device supports the terminal to operate in the second mode, or the "Rel-17 Redcap support" is an optional terminal capability for the terminal.

As an embodiment, the network device may send "Peak-datarate-reduction-RedCap-r18". The "Peak-datarate-reduction-RedCap-r18" indicates whether the network device supports the terminal to operate in the first mode. Or, the "Peak-datarate-reduction-RedCap-r18" indicates whether the network device supports the terminal to operate in the second mode, or the "Peak-datarate-reduction-RedCap-r18" is an optional terminal capability for the terminal.

The second parameter may be any parameter for calculating a data rate.

In some embodiments, the second parameter may be $v_{Layers}^{(\bar{j})} * Q_m^{(j)} * f^{(j)}$, where $v_{Layers}^{(j)}$ denotes a maximum number of layers supported by the j-th carrier, for example, the maximum number of layers of PUSCH and/or PDSCH, $Q_m^{(j)}$ denotes a maximum modulation order, and $f^{(j)}$ denotes a scaling factor of the j-th carrier.

In some embodiments, the second parameter may also be $Q_m^{(j)}$.

In some embodiments, the second parameter may be $f^{(j)}$.

$f^{(j)}$ may be a value agreed upon by a protocol.

Of course, the above are just a few examples of the first information, and the specific implementation is not limited to the above examples.

In some embodiments, the network device 102 sends a downlink message. The downlink message includes the first information. The downlink message is, for example, a system message and/or a dedicated message.

In some embodiments, the first information may include one or more bits, and different bit values of these bits may represent whether the network device supports or expects the terminal to operate in two states of the first mode, and/or whether the network device supports or expects the terminal to operate in two states of the second mode.

Some network devices support the terminal to operate in the first mode in terms of software and hardware, which may save power consumption.

In some embodiments, the terminal 101 receives the first information sent by the network device 102.

In some embodiments, the terminal may be a RedCap terminal or an eRedcap terminal in an enhanced mode. The RedCap terminal herein may support the first mode and the second mode simultaneously, or support the second mode alone or support the first mode alone.

For example, some RedCap terminals have a low cost and simple baseband processing-related circuits. In this case, the RedCap terminal supports only the first mode with a lower peak rate or a smaller baseband bandwidth for the hardware, but does not support the second mode with a higher peak rate and a larger baseband bandwidth.

In some embodiments, the terminal is a specific type of terminal.

The specific type of terminal may include: a R18 Redcap terminal, a R17 Redcap terminal or an eRedcap terminal with 20M bandwidth. The latter may use most of the hardware implementation of the R17 Redcap terminal, but a buffer is slightly smaller during processing data. The terminal capability of the R17 Redcap terminal may be stronger, and can take into account a terminal capability defined in the R18 and/or a terminal capability defined in the R17.

For example, the terminal supports the terminal capability defined in the R18 version, that is, the terminal may operate in the first mode during initial access.

The first mode may be a peak rate reduction mode and/or a narrower narrowband operating mode.

For example, the peak rate reduction may cause the peak rate of the terminal to be reduced to 10 Mbps. The peak rate includes an uplink peak rate and/or a downlink peak rate.

For example, scheduling of the data channel uses a lower bandwidth, such as 5Mhz, and its specific characteristics are as follows.

Specifically, a 5MHz baseband (BB) bandwidth is only used for PDSCH and/or PUSCH, with a 20MHz RF bandwidth for other channels of UL and/or DL. Herein, the 5MHz bandwidth may be used for broadcast or unicast of the PDSCH. Other physical channels and/or signals are still allowed to use a 20MHz bandwidth part (BWP).

If the terminal supports the first mode, it means that a condition met for peak rate limiting may include that:

relaxation of a constraint for the peak rate may be based on $v^{(j)}_{Layers} * Q^{(j)}_m * f^{(j)}$. A value of $v^{(j)}_{Layers} * Q^{(j)}_m * f^{(j)}$ may be reduced to less than or equal to 4, for example, reduced to 3.2, 0.75, etc.

The specific type of terminal may operate in the first mode or the second mode.

Some network devices support the terminal to operate in the first mode in terms of the software and the hardware, which may save the power consumption.

Some terminals support operating in the second mode in terms of the software and the hardware, but do not desire to operate in the second mode for purposes such as saving the power consumption. In this case, the second information may indicate that the terminal does not desire to operate in the second mode.

In some embodiments, a terminal capability for the second mode is higher than a terminal capability for the first mode.

In some embodiments, a power consumption overhead of the terminal operating in the second mode may be higher than a power consumption overhead of the terminal operating in the first mode.

In some embodiments, the first mode is an enhanced mode of the second mode, and the enhanced mode may be an operating mode for a terminal with specific bandwidth and/or a terminal with lower power consumption.

In an example, the information processing method may include the following step.

At step S2102, the terminal determines to operate in the first mode or the second mode.

Illustratively, the step S2102 may be an optional step.

In some embodiments, the step S2102 may include at least one of:

the terminal determining, according to the first information, whether the network device supports or expects the terminal to operate in the first mode; or

the terminal determining, according to the first information, whether the network device supports or expects the terminal to operate in the second mode.

In some embodiments, the terminal determining to operate in the first mode or the second mode includes at least one of the followings.

The information processing method includes determining, by the terminal, that the terminal operates in the first mode, in which the first information indicates that the network device supports or expects the terminal to operate in the first mode.

The information processing method includes determining, by the terminal, that the terminal operates in the second mode, in which the first information indicates that the network device does not support the terminal to operate in the first mode, and the first information indicates that the network device supports the terminal to operate in the second mode.

In some embodiments, determining, by the terminal, that the terminal operates in the first mode includes: determining, by the terminal, that the terminal operates in the second mode, in which the first information indicates that the network device does not support the terminal to operate in the first mode, and the first information indicates that the network device supports or expects the terminal to operate in the second mode, and the terminal has a capability of operating in the second mode.

Some terminals support operating in the second mode in terms of the software and the hardware, but do not desire to operate in the second mode for purposes such as saving power consumption, etc. In this case, the terminal may determine to operate in the first mode according to an indication of the first information.

In some embodiments, the information processing method may include: determining, by the terminal, whether the terminal accesses to a target cell in a non-connected state, in which the target cell is a cell that supports the terminal to operate in the second mode.

In some cases, the terminal detects that a signal quality of a current serving cell drops to a threshold value, and detects that a signal quality of a neighboring cell is better than the signal quality of the current serving cell, and the signal quality of the neighboring cell is higher than the threshold value, then the neighboring cell may be considered as the target cell, and the terminal may reselect and access to the target cell.

In some embodiments, the terminal may determine whether the target cell supports the terminal to operate in the second mode according to a protocol agreement.

In some embodiments, the first information may indicate whether the current serving cell and the neighboring cell support the terminal to operate in the second mode. Therefore, the terminal may know, according to the first information, whether the neighboring cell supports the terminal to operate in the second mode, and the neighboring cell may be considered as the target cell.

In some embodiments, the information processing method may include: the terminal operating in the first mode during an initial access process, and maintaining operating in the first mode after completing the initial access process.

In some embodiments, the information processing method may include: the terminal operating in the second mode during an initial access process, and switching to operating in the first mode after completing the initial access process.

In some embodiments, the information processing method may include: the terminal operating in the first mode during an initial access process, and switching to operating in the second mode after completing the initial access process.

At step S2103, the terminal 101 sends second information to the network device 102.

In some embodiments, the network device 102 receives the second information reported by the terminal 101.

In some embodiments, the step S2103 and the step S2102 may be executed in an interchangeable order or simultaneously.

In some embodiments, the step S2102 is performed first and the step S2103 is performed later. The terminal may determine a current operating mode according to the support and/or expectation of the network device for the terminal to operate in the first mode or the second mode indicated by the first information. Then, the step S2103 is performed to indicate the second information of the current operating mode of the terminal to the network device.

In some embodiments, the step S2103 is performed first and the step S2102 is performed later. The second information sent by the terminal may include capability information of the terminal, and the capability information may indicate that the terminal itself supports and/or expects to operate in the first mode or the second mode.

In some embodiments, the second information indicates whether the terminal has a capability of operating in the second mode.

In some embodiments, the second information indicates whether the terminal supports or expects to operate in the second mode.

In some embodiments, the second information indicates, to the network device, determining whether random access after initial access of the terminal supports or expects to operate in the second mode.

In some embodiments, the second information includes capability information.

In some embodiments, the second information includes UE assistance information (UAI).

In some embodiments, receiving the second information of the terminal includes: receiving, by the network device, the capability information sent by the terminal.

In some embodiments, receiving the second information of the terminal includes: receiving, by the network device, the UAI sent by the terminal.

In some embodiments, the capability information indicates that the terminal has the capability of operating in the second mode.

In some embodiments, the UAI indicates whether the terminal supports or expects to operate in the second mode.

As an embodiment, if the network device indicates that the terminal can report assistance information, the terminal can report the assistance information, otherwise the terminal does not need to report the assistance information. The assistance information may include, but is not limited to, the aforementioned UAI.

In some embodiments, the second information includes at least one of: whether the terminal has a capability of operating in the second mode after initial access; or whether the terminal supports or expects to operate in the second mode after initial access.

In some embodiments, the second information may include one or more bits, and different bit values of these bits may represent two states of whether the terminal has the capability of operating in the second mode, and/or two states of whether the terminal supports or expects to operate in the second mode.

In some embodiments, the terminal may use any uplink message to send the second information to the network device. Illustratively, the terminal may use an RRC message, a MAC message, or uplink control information (UCI) to send the second information to the network device.

The MAC message may include, but is not limited to, a MAC layer control element (CE).

By reporting of the second information, the terminal may facilitate the network device to control the operating mode of the terminal, or to know a possible operating mode of the terminal, according to a communication requirement and/or a system capacity.

In some embodiments, the second information includes a first parameter.

In some embodiments, the second information includes a third field.

In some embodiments, the second information includes a fourth field.

In some embodiments, the second information includes a fifth field.

A value of the first parameter and a specified threshold may indicate whether the terminal supports peak rate reduction or increase. The third field indicates whether the terminal supports or expects to operate in the second mode. The fourth field indicates whether the terminal supports a bandwidth on which the terminal operates in the second mode. The fifth field indicates whether the terminal supports peak rate reduction or increase.

A data rate for a terminal transmission may be calculated by the following formula:

$$
\text{data rate } = 10^{-6} \cdot \sum_{j=1}^{J} \left( v_{Layers}^{(j)} \cdot Q_m^{(j)} \cdot f^{(j)} \cdot R_{\max} \cdot \frac{N_{PRB}^{BW(j),\mu} \cdot 12}{T_s^{\mu}} \cdot \left(1 - OH^{(j)}\right) \right)
$$

,

where J denotes the number of carrier aggregations in a single frequency band (BAND) or across frequency bands, and $j$ denotes a sequence number of the aggregated carrier. $v_{Layers}^{(j)}$ denotes the maximum number of layers supported by the j-th carrier, for example, the maximum number of layers of PUSCH and/or PDSCH. $Q_m^{(j)}$ denotes a maximum modulation order. $f^{(j)}$ denotes a scaling factor of the j-th carrier. $N_{PRB}^{BW(j),\mu}$ denotes a maximum resource block (RB) for a bandwidth $BW^{(j)}$ with $u$, $BW^{(j)}$ denotes a maximum bandwidth supported by the terminal on a specified frequency band. $T_s^{\mu}$ denotes a maximum duration of an orthogonal frequency division multiplexing (OFDM) symbol in a subframe corresponding to $u$. $OH^{(j)}$ denotes an overhead value corresponding to the j-th carrier, as follows:

0.14, for downlink transmission in frequency range (FR) 1;
0.18, for downlink transmission in FR2;
0.08, for uplink transmission in FR1;
0.10, used for uplink transmission in FR2.

In an embodiment of the present invention, the first parameter may be any parameter for calculating the data rate. Specifically, the first parameter may be any one of $v_{Layers}^{(j)}$, $Q_m^{(j)}$, or $f^{(j)}$.

The specified threshold value may be any first parameter, determining whether the terminal supports or expects to operate in the second mode. The specified threshold value may be a value agreed upon by a protocol, or a threshold value specified by the network device.

In some embodiments, a product of $v_{Layers}^{(j)} * Q_m^{(j)} * f^{(j)}$ is compared with the specified threshold value, and a comparison result is used to determine whether the terminal supports or expects to operate in the second mode. Illustratively, the specified threshold value may be 4, 3, 3.2, 1 or 0.75.

As another example, the first parameter may be $f^{(j)}$. The specified threshold here may be another preset value that may be compared with $f^{(j)}$.

It is worth noting that for a cell supporting a supplement uplink (supplement UL Link, SUL) carrier, when calculating the number of carriers, the UL carrier and/or the SUL carrier supporting a higher data rate may be included in the calculation.

For UL reception switching of the terminal between different carriers, only a carriers with a higher rate resulting from supporting MIMO (multiple input multiple output) layer merging between carriers is counted in the number of carriers.

The maximum data rate supported by the terminal may be calculated using the above formula to calculate the maximum uplink rate supported by the terminal.

When the terminal resides in a single-carrier cell, the product of $v_{Layers}^{(j)} * Q_m^{(j)} * f^{(j)}$ is generally not less than 4.

In some embodiments, the second information may be carried by any one of the third field, the fourth field or the fifth field.

The third field carries mode information, and the mode information may include: a mode identifier, etc. The third field may include one or more bits. The third field carries information about the second mode, that is, the third field indicates that the terminal supports or expects to operate in the second mode. The third field carries information about the first mode, that is, the third field indicates that the terminal supports or expects to operate in the first mode.

The fourth field may carry a maximum supported bandwidth or an expected operating bandwidth of the terminal. For example, the fourth field may carry a supported baseband bandwidth or an expected operating baseband bandwidth for the first channel using by the terminal. Therefore, the network device can know the baseband bandwidth supported or expected to operate by the terminal according to the fourth field, to know whether the terminal supports or expects to operate in the second mode.

The fifth field directly indicates that the terminal supports the peak rate reduction or the peak rate increase. If the terminal initially accesses in the first mode and the fifth field indicates that the terminal supports the peak rate increase, it means that the terminal supports or expects to operate in the second mode; otherwise, the terminal does not support or expect to operate in the second mode.

In some embodiments, a capability of the terminal supporting or expecting to operate in the second mode is based on UE, based on frequency band, or based on frequency range.

If the capability of the terminal supporting or expecting to operate in the second mode is based on the UE, it means that the entire terminal supports or expects to operate in the second mode regardless of operating in any frequency domain position that the terminal can support.

A system bandwidth used by the wireless communication system may be divided into one or more frequency bands. One frequency band includes one or more frequency points.

The terminal may support or expect to operate in the second mode on some frequency bands, or may not support or expect to operate in the second mode on some other frequency bands.

The terminal may support or expect to operate in the second mode in one or more frequency ranges. For example, the terminal supports or expects to operate in the second mode in the frequency range (FR) 1 and/or the FR2.

A frequency range of the FR1 may be 450MHz to 6000MHz, and may also be referred to as sub 6G.

A frequency range of the FR2 may be 24250MHz~52600MHz, and a corresponding maximum system bandwidth may be 400MHz.

One frequency range may include one or more frequency bands.

In some embodiments, the second information further includes range information. The range information indicates that the terminal supporting or expecting to operate in the second mode is based on the entire UE, or based on the frequency band, or based on the frequency range.

Illustratively, if the terminal supporting or expecting to operate in the second mode is based on the frequency band, the range information may include a frequency band identifier. If the terminal supporting or expecting to operate in the second mode is based on the frequency range, the range information may include: a range identifier of the frequency range, etc.

Of course, this is just an example, and the specific implementation is not limited to this example.

If the terminal supports the first mode, it means that a condition met for peak rate limiting may include that:

relaxation of a constraint for the peak rate may be based on $v_{Layers}^{(j)} * Q_m^{(j)} * f^{(j)}$. A value of $v_{Layers}^{(j)} * Q_m^{(j)} * f^{(j)}$ may be reduced to a first value. The first value is less than or equal to 4, for example, 3.2, 0.75, etc.

As an embodiment: the second mode may a higher peak rate and/or a larger narrowband operating mode. For example, scheduling of the data channel uses a larger bandwidth, such as 20Mhz.

Specifically, the terminal operates in the second mode and may use a 20 MHz baseband bandwidth to indicate PDSCH and/or PUSCH transmission. For example, the 20 MHz baseband bandwidth may be used to support unicast or broadcast of the PDSCH. A 20 MHz RF transmission may be supported for UL and/or DLC transmission.

The constraint for the peak rate may include that: a value of $v_{Layers}^{(j)} * Q_m^{(j)} * f^{(j)}$ is reduced to a second value. The second value may not be less than the first value, for example, the second value may be the same as the first value. That is, during the initial access process and/or after the initial access is completed, the constraint for its peak rate remains unchanged.

Herein, the first value and/or the second value may be one of the above specified thresholds.

As an embodiment, the terminal may report its supportOfRedCapPR1-r18. The supportOfRedCapPR1-r18 indicates whether the terminal supports the second mode, or whether the supportOfRedCapPR1-r18 is an optional terminal capability for the terminal.

As an embodiment, the terminal may report its supportedRedCap-R17. The supportedRedCap-R17 may be understood as a field or an information element (IE), which may indicate whether the terminal supports the second mode.

As an embodiment, the terminal may report whether the terminal supports a feature of the peak rate reduction or increase, for example, using a value of Peak-datarate-reduction-RedCap-r18. The Peak-datarate-reduction-RedCap-r18 may be understood as a field or an information element (IE), which may indicate whether the terminal supports the peak rate reduction or increase.

The above several fields or IEs may be reported separately or in a random combination.

Illustratively, after the terminal enters an RRC connected state, the terminal reports a combination of one or more of the following parameters:

Option 1: reporting a product of $v^{(j)}_{Layers}$, $Q^{(j)}_m$ and $f^{(j)}$ less than 4.

Option 2: reporting supportedRedCap-R17;

Option 3: reporting whether to support the 20MHz BB bandwidth.

When reporting the parameters, a single parameter or a part of the parameter among $v^{(j)}_{Layers}$, $Q^{(j)}_m$ and $f^{(j)}$ may be reported. For example, only one of the following is reported: $v^{(j)}_{Layers} * Q^{(j)}_m * f^{(j)} < 3.2$.

The second information may also directly indicate whether to support the 20 MHz baseband bandwidth.

In some embodiments, after the terminal reports the second information, the network device may send the first information according to the second information reported by the terminal. The first information may indicate that the terminal operates in the first mode or the second mode.

In some embodiments, after the terminal reports the second information, the terminal may operate in the first mode or the second mode according to the communication requirement or the protocol agreement, etc. The network device knows the operating mode in which the terminal supports or expects to operate, and may also know the operating mode of the terminal according to the protocol agreement.

In some embodiments, the network device 102 receives the second information sent by the terminal 101.

In some embodiments, the network device 102 receives the second information reported by the terminal 101 in a connected state.

In some embodiments, the network device 102 receives the second information reported by the terminal 101 in the RRC connected state.

In some embodiments, in a case where the terminal is in the RRC connected state, the terminal may send the second information to the network device through various RRC messages. For example, the RRC message may be multiplexed with an RRC message that sends other contents.

In some embodiments, the network device receives the second information through any RRC message of the terminal entering the RRC connected state from RRC non-connected state.

For example, the RRC message may include, but is not limited to, at least one of:

an RRC resume complete (RRCResumeComplete) message, in which the RRCResumeComplete message may be used by the terminal to notify the network device that the terminal enters the RRC connected state from the RRC non-connected state;

an RRC connection setup complete (RRCSetupComplete) message, in which the RRCSetupComplete message may be used by the terminal to notify the network device that the terminal enters the RRC connected state from an RRC idle state; or

an RRC connection reestablishment complete (RRCReestablishmentComplete) message, in which the RRCReestablishmentComplete message may be used by the terminal to notify the network that reestablishment of the RRC connection is complete. For example, the RRC connection may involve a radio bearer (RB) of the RRC connection. The RB may include: a signaling radio bearer (SRB) and/or a data radio bearer (DRB).

In this case, the terminal in the RRC non-connected state may send the second information of whether the terminal itself supports or expects to operate in the second mode to the network device during a process of entering the RRC connected state, so that the network device can timely know the capability or the expectation of the terminal during the process of the terminal entering the RRC connected state. The RRC non-connected state here may include: an RRC idle state and/or an RRC inactive state.

In some embodiments, when the terminal sends the RRC message requesting to enter the RRC connected state in order to transmit the second information, after completing the sending of the second information, the terminal may continue to return to the RRC non-connected state, and the terminal will not further respond to a response message of the network device, and enter the RRC connected state. Thus, the number of times the terminal enters the RRC connected state and a time length of the terminal maintaining the RRC connected state may be reduced, thereby reducing power consumption.

When receiving an RRC message including the second information, the network device may respond to the RRC message and send the response message to the terminal according to an agreement. Or, after extracting the second information from the RRC message, the network device may ignore the RRC message and send no response message to the UE, thereby reducing sending of an unnecessary response message by the network device.

Illustratively, when the RRC message carries a preset indicator, it may be considered that the RRC message is for transmitting the second information, rather than the terminal needing to enter the RRC connection state. Illustratively again, when the RRC message does not carry the preset indicator, it may be considered that the RRC message is used for requesting by the terminal to enter the RRC connection state and sending the second information to the network device during the process of entering the RRC connection state.

In some embodiments, after the network device receives the second information, the network device knows the operating mode in which the terminal supports or expects to operate, or the network device may also know the operating mode of the terminal according to a protocol agreement.

In some embodiments, at least one of steps S2101 to S2103 may be performed. For example, step S2101 may be implemented as an independent embodiment, step S2102 may be implemented as an independent embodiment, step S2103 may be implemented as an independent embodiment, steps S2101+S2102 may be implemented as an independent embodiment, steps S2101+S2102+S1203 may be implemented as an independent embodiment, steps S2102+S1203 may be implemented as an independent embodiment, and steps S2101+S2103 may be implemented as an independent embodiment, but is not limited thereto.

In some embodiments, step S2102 and step S2103 are optional steps, and one or more of these steps may be omitted or replaced in different embodiments.

In some embodiments, step S2103 is an optional step, and one or more of these steps may be omitted or replaced in different embodiments.

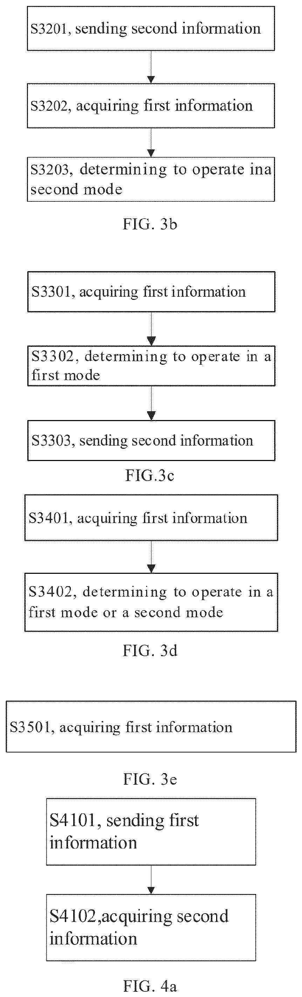

FIG. 3e is a flowchart illustrating an information processing method according to an embodiment of the present invention. As illustrated in FIG. 3e, the above method may be performed by a terminal and include the following step.

At step S3501, first information is acquired.

The terminal may include, but is not limited to, a RedCap terminal. In a specific implementation, the terminal may also be other types of terminals, such as, an Internet of Things (IoT) terminal.

In an example, a peak rate of the terminal operating in the second mode is higher than a peak rate of the terminal operating in the first mode, and/or a baseband bandwidth for a first channel supported by the terminal operating in the second mode is greater than a baseband bandwidth for the first channel supported by the terminal operating in the first mode.

In an example, the first information includes at least one of: a first field, in which the first field indicates whether the network device supports or expects the terminal to operate in the first mode; or a second field, in which the second field indicates whether the network device supports or expects the terminal to operate in the second mode.

In an example, sending the first information includes at least one of: sending a system message, in which the system message includes the first information; or sending a dedicated message, in which the dedicated message includes the first information.

In an example, the method further includes: acquiring second information, in which the second information indicates at least one of: whether the terminal has a capability of operating in the second mode; or whether the terminal supports or expects to operate in the second mode.

In an example, the second information indicates at least one of: whether the terminal has a capability of operating in the second mode after initial access; or whether the terminal supports or expects to operate in the second mode after initial access.

In an example, receiving the second information includes: acquiring the second information reported by the terminal in a connected state.

In an example, acquiring the second information includes at least one of: acquiring capability information, in which the capability information indicates that the terminal has the capability of operating in the second mode; or acquiring UAI, in which the UAI indicates whether the terminal supports or expects to operate in the second mode.

In an example, the second information includes at least one of: a first parameter, in which a value of the first parameter indicates that the terminal supports the first mode or the second mode; a third field, in which the third field indicates whether the terminal supports or expects to operate in the second mode; a fourth field, in which the fourth field indicates whether the terminal supports a bandwidth on which the terminal operates in the second mode; or a fifth field, in which the fifth field indicates whether the terminal supports peak rate reduction or increase.

For the optional implementation method of step S3501, reference may be made to the optional implementation method of step S2101 in FIG. 2 and other related parts in embodiment involved in FIG. 2, and details may not be repeated here.

FIG. 3a is a flowchart illustrating an information processing method according to an embodiment of the present invention. As illustrated in FIG. 3a, the above method may be performed by a terminal and include the following step.

At step S3101, first information is acquired.

For the optional implementation of step S3101, reference may be made to the optional implementation of step S2101 in FIG. 2 and other related parts in an embodiment involved in FIG. 2, and details may not be repeated here.

In some embodiments, the terminal 101 receives the first information from the network device 102, but may also receive the first information from other entities.

In some embodiments, the terminal 101 acquires the first information specified by a protocol.

In some embodiments, the terminal 101 acquires the first information from an upper layer(s).

In some embodiments, the terminal 101 performs processing to acquire the first information.

In some embodiments, step S3101 may be omitted, and the terminal 101 may autonomously implement the function indicated by the first information, or the above function may be null or default.

At step S3102, the terminal determines to operate in a first mode or a second mode.

It is worth noting that step S3102 is an optional step. For the optional implementation of step S3102, reference may be made to the optional implementation of step S2102 in FIG. 2 and other related parts in an embodiment involved in FIG. 2, and details may not be repeated here.

In an example, the second information may be used by the network device 102 to determine whether the terminal supports operating in the second mode. For the optional implementation method thereof, reference may be made to the optional implementation method of step S2103 in FIG. 2 and other related parts in an embodiment involved in FIG. 2, and details may not be repeated here.

In some embodiments, the terminal accesses to the target cell according to the first information.

In other embodiments, the terminal accesses to the target cell using a selfdetermined mode.

In some embodiments, the target cell is a cell that supports the terminal to operate in the second mode.

The target cell may be a neighboring cell of a source cell. If a network device of the source cell sends the first information of the neighboring cell, the terminal may select the target cell according to the first information when performing cell reselection or cell handover.

FIG. 3b is a flowchart illustrating an information processing method according to an embodiment of the present invention. As illustrated in FIG. 3b, the above method may be performed by a terminal and include the following step.

At step S3201, second information is sent.

In some embodiments, the terminal 101 sends the second information to the network device 102, and may also send the second information to other entities.

In an example, the second information is used by the network device 102 to determine whether the terminal has the capability of operating in the second mode, or whether the terminal supports or expects to operate in the second mode. For the optional implementation method thereof, reference may be made to the optional implementation method of step S2103 of FIG. 2 and other related parts in an embodiment involved in FIG. 2, and details may not be repeated here.

For the optional implementation of step S3201, reference may be made to the optional implementation of step S2103 in FIG. 2 and other related parts in an embodiment involved in FIG. 2, and details may not be repeated here.

At step S3202, first information is acquired.

In some embodiments, the terminal 101 receives the first information from the network device 102, but may also receive the first information from other entities.

In some embodiments, the terminal 101 acquires the first information specified by a protocol.

In some embodiments, the terminal 101 acquires the first information from an upper layer(s).

In some embodiments, the terminal 101 performs processing to acquire the first information.

In some embodiments, step S3202 may be omitted, and the terminal 101 may autonomously implement the function indicated by the first information, or the above function may be null or default.

For the optional implementation of step S3202, reference may be made to the optional implementation of step S2101 in FIG. 2 and other related parts in an embodiment involved in FIG. 2, and details may not be repeated here.

At step S3203, it is determined to operate in a second mode.

For the optional implementation of step S3203, reference may be made to the optional implementation of step S2102 in FIG. 2 and other related parts in an embodiment involved in FIG. 2, and details may not be repeated here.

In some embodiments, the terminal 101 sends the second information to the network device 102, but may also send the second information to other entities.

For the optional implementation of step S3203, reference may be made to the optional implementation of step S2102 in FIG. 2 and other related parts in an embodiment involved in FIG. 2, and details may not be repeated here.

FIG. 3c is a flowchart illustrating an information processing method according to an embodiment of the present invention. As illustrated in FIG. 3c, the above method may be performed by a terminal and include the following step.

At step S3301, first information is acquired.

For the optional implementation of step S3301, reference may be made to the optional implementation of step S2101 in FIG. 2 and other related parts in an embodiment involved in FIG. 2, and details may not be repeated here.

In some embodiments, the terminal 101 receives the first information from the network device 102, but may also receive the first information from other entities.

In some embodiments, the terminal 101 acquires the first information specified by a protocol.

In some embodiments, the terminal 101 acquires the first information from an upper layer(s).

In some embodiments, the terminal 101 performs processing to acquire the first information.

In some embodiments, step S3301 may be omitted, and the terminal 101 may autonomously implement the function indicated by the first information, or the above function may be null or default.

At step S3302, it is determined to operate in a second mode.

For the optional implementation of step S3302, reference may be made to the optional implementation of step S2102 in FIG. 2 and other related parts in an embodiment involved in FIG. 2, and details may not be repeated here.

At step S3303, the second information is sent.

For the optional implementation of step S3303, reference may be made to the optional implementation of step S2103 in FIG. 2 and other related parts in an embodiment involved in FIG. 2, and details may not be repeated here.

In an example, the second information is used by the network device 102 to determine whether the terminal 101 supports to operate in the second mode. For the optional implementation method thereof, reference may be made to the optional implementation method of step S2103 in FIG. 2 and other related parts in an embodiment involved in FIG. 2, and details may not be repeated here.

In some embodiments, the terminal 101 sends the second information to the network device 102, but may also send the second information to other entities.

FIG. 3d is a flowchart illustrating an information processing method according to an embodiment of the present invention. As illustrated in FIG. 3d, the above method may be performed by a terminal and include the following step.

At step S3401, first information is acquired.

For the optional implementation of step S3401, reference may be made to the optional implementation of step S2101 in FIG. 2 and other related parts in an embodiment involved in FIG. 2, and details may not be repeated here.

In some embodiments, the terminal 101 receives the first information from the network device 102, but may also receive the first information from other entities.

In some embodiments, the terminal 101 acquires the first information specified by a protocol.

In some embodiments, the terminal 101 acquires the first information from an upper layer(s).

In some embodiments, the terminal 101 performs processing to acquire the first information.

In some embodiments, step S3401 may be omitted, and the terminal 101 may autonomously implement the function indicated by the first information, or the above function may be null or default.

At step S3402, it is determined to operate in a first mode or a second mode.

For the optional implementation of step S3402, reference may be made to the optional implementation of step S2102 in FIG. 2 and other related parts in an embodiment involved in FIG. 2, and details may not be repeated here.

For the optional implementation of step S4102, reference may be made to the optional implementation of step S2101 in FIG. 2 and other related parts in an embodiment involved in FIG. 2, and details may not be repeated here.

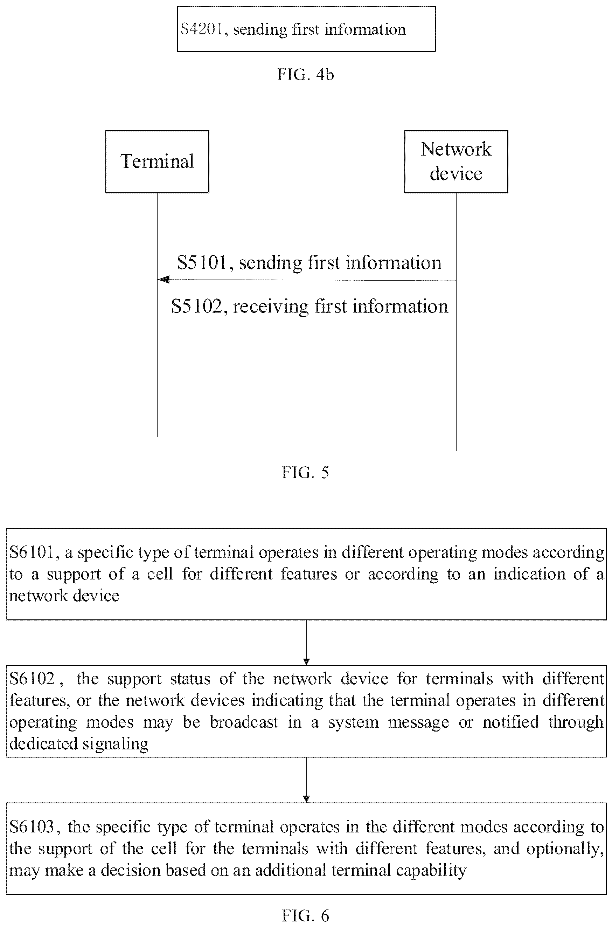

FIG. 4b is a flowchart illustrating an information processing method according to an embodiment of the present invention. As illustrated in FIG. 4b, the above method may be performed by a network device 102 and include the following step.

At step S4201, first information is sent.

For the optional implementation of step S4201, reference may be made to the optional implementation of step S2101 in FIG. 2 and other related parts in an embodiment involved in FIG. 2, and details may not be repeated here.

In an example, the first information is used for the terminal to determine whether the network device supports or expects the terminal to operate in the first mode.

In an example, the first information is used for the terminal to determine whether the network device supports or expects the terminal to operate in the second mode.

A peak rate of the terminal operating in the second mode is higher than a peak rate of the terminal operating in the first mode, and/or a baseband bandwidth for a first channel supported by the terminal operating in the second mode is greater than a baseband bandwidth for the first channel supported by the terminal operating in the first mode.

In some embodiments, the network device 102 sends the first information to the terminal 101, but may also send the first information to other entities.

For the optional implementation of step S4201, reference may be made to the optional implementation of step S2101 in FIG. 2 and other related parts in an embodiment involved in FIG. 2, and details may not be repeated here.

In an example, the peak rate of the terminal operating in the second mode is higher than the peak rate of the terminal operating in the first mode, and/or the baseband bandwidth for a first channel supported by the terminal operating in the second mode is greater than the baseband bandwidth for the first channel supported by the terminal operating in the first mode.

In an example, the first information includes at least one of: a first field, in which the first field indicates whether the network device supports or expects the terminal to operate in the first mode; or a second field, in which the second field indicates whether the network device supports or expects the terminal to operate in the second mode.

In an example, sending the first information includes at least one of: sending a system message, in which the system message includes the first information; or sending a dedicated message, in which the dedicated message includes the first information.

In an example, the method further includes: acquiring second information, in which the second information indicates at least one of: whether the terminal has a capability of operating in the second mode; or whether the terminal supports or expects to operate in the second mode.

In an example, the second information indicates at least one of: whether the terminal has a capability of operating in the second mode after initial access; or whether the terminal supports or expects to operate in the second mode after initial access.

In an example, receiving the second information includes: acquiring the second information reported by the terminal in a connected state.

In an example, acquiring the second information includes at least one of: acquiring capability information, in which the capability information indicates that the terminal has the capability of operating in the second mode; or acquiring UAI, in which the UAI indicates whether the terminal supports or expects to operate in the second mode.

In an example, the second information includes at least one of: a first parameter, in which a value of the first parameter indicates that the terminal supports the first mode or the second mode; a third field, in which the third field indicates whether the terminal supports or expects to operate in the second mode; a fourth field, in which the fourth field indicates whether the terminal supports a bandwidth on which the terminal operates in the second mode; or a fifth field, in which the fifth field indicates whether the terminal supports peak rate reduction or increase.

FIG. 4a is a flowchart illustrating an information processing method according to an embodiment of the present invention. As illustrated in FIG. 4a, the above method may be performed by a network device 102 and include the following step.

At step S4101, first information is sent.

For the optional implementation of step S4101, reference may be made to the optional implementation of step S2101 in FIG. 2 and other related parts in an embodiment involved in FIG. 2, and details may not be repeated here.

In an example, the first information is used for the terminal to determine whether the network device supports or expects the terminal to operate in the first mode.

In an example, the first information is used for the terminal to determine whether the network device supports or expects the terminal to operate in the second mode.

A peak rate of the terminal operating in the second mode is higher than a peak rate of the terminal operating in the first mode, and/or a baseband bandwidth for a first channel supported by the terminal operating in the second mode is greater than a baseband bandwidth for the first channel supported by the terminal operating in the first mode.

In some embodiments, the network device 102 sends the first information to the terminal 101, but may also send the first information to other entities.

For the optional implementation of step S4101, reference may be made to the optional implementation of step S2101 in FIG. 2 and other related parts in an embodiment involved in FIG. 2, and details may not be repeated here.

At step S4102, second information is acquired.

For the optional implementation of step S4102, reference may be made to the optional implementation of step S2103 in FIG. 2 and other related parts in an embodiment involved in FIG. 2, and details may not be repeated here.

In some embodiments, the network device 102 acquires the second information from the terminal 101, and may also receive the second information from other entities.

In some embodiments, the network device 102 acquired second information specified by a protocol.

In some embodiments, the network device 102 acquired the second information from an upper layer(s).

In some embodiments, the network device 102 performs processing to acquire the second information.

In some embodiments, step S3102 may be omitted, and the network device 102 may autonomously implement the function indicated by the second information, or the above function may be null or default.

FIG. 5 is a flowchart illustrating an information processing method according to an embodiment of the present invention. As illustrated in FIG. 5, an embodiment of the present invention relates to an information processing method configured in a communication system 100. The method includes the following steps.

At step S5101, a network device 102 sends first information to a terminal 101.

For the optional implementation of step S5101, reference may be made to the optional implementation of step S2101 in FIG. 2, step S3101 in FIG. 3, step S4101 in FIG. 4, and other related parts in embodiments involved in FIG. 2, FIG. 3, and FIG. 4, and details may not be repeated here.

At step S5102, the terminal 101 receives the first information sent by the network device 102.

For the optional implementation of step S5102, reference may be made to the optional implementation of step S2101 in FIG. 2, step S3101 in FIG. 3, step S4101 in FIG. 4, and other related parts in embodiments involved in FIG. 2, FIG. 3, and FIG. 4, and details may not be repeated here.

In some embodiments, the above method may include the method described in the above embodiments of the communication system side, the terminal side, the network device side, etc., and details may not be repeated here.

FIG. 6 is a flowchart illustrating an information processing method according to an embodiment of the present invention. As illustrated in FIG. 6, an embodiment of the present invention relates to an information processing method. The method includes the following steps.

At step S6101, a specific type of terminal operates in different operating modes according to a support of a cell for different features or according to an indication of a network device.

In some embodiments, the support of the cell for the different features includes: whether the network device supports the terminal to operate in a first mode, and/or whether the network device supports the terminal to operate in a second mode. The indication of the network device includes: whether the network device expects the terminal to operate in the first mode, and whether the network device expects the terminal to operate in the second mode.

In some embodiments, the specific type of terminal may be a first type of terminal, i.e., a Redcap type terminal introduced in the R18 version (Rel-18eRedCap).

The type of the terminal is not limited thereto. The terminal may also be, for example, an Internet of Things (IoT) terminal.

In some embodiments, the terminal (herein, the specific type of terminal) operates in different operating modes according to the support of the network device for terminals with different features or the indication of the network device.

In some embodiments, the terminal may operate in a certain operating mode according to the indication from the network device.

In some embodiments, the operating mode includes the first mode or the second mode.

In some embodiments, the terminal may determine which operating mode in which the termina operates according to a support status of a base station. After the terminal acquires the support status of the base station, what rule may be used to determine which operating mode may be agreed upon in a protocol.

In some embodiments, on the basis of the rule agreed upon in a protocol, a first operating mode takes precedence. That is, if the network device notifies the cell that it can support the terminal to operate in the first mode, the terminal operates in the first mode. If the network device notifies the cell that it does not support the terminal to operate in the first mode, but supports the terminal to operate in the second mode, the terminal operates in the second mode.

Or, if the network device notifies the cell that it does not support the terminal to operate in the first mode, but supports the terminal to operate in the second mode, the terminal operates in the second mode (for example, may operate in the R17 base station during handover).

In some embodiments, a mode in which the terminal operates includes the following definitions.

Take the terminal operating in the first mode as an example:

1) the method includes operating in the first mode during an initial access process, and switching to an operating mode different from the first mode after the initial access process (or reporting a support capability for a second mode); or,
2) the method includes operating in the first mode both during and after the initial access process; or,
3) the method includes operating in the first mode after switching in a connected state. The above feature items may be combined.

In some embodiments, the first mode may be: an operating mode with a peak rate reduction and/or a narrower narrowband. For example, a lower bandwidth, such as 5Mhz, is adopted for data scheduling and the first mode may have the following specific characteristics.

1) A 5 MHz BB bandwidth is used only for a PDSCH (for both unicast and broadcast) and a PUSCH, and a 20 MHz RF bandwidth is used for a UL and a DL. Here, the 5MHz bandwidth may be used for broadcast or unicast of the PDSCH. Other physical channels and signals are still allowed to use a bandwidth part (BWP) up to 20 MHz.
2) Relaxation of a limit condition of a constraint for a peak rate is performed. For example, the condition met may

include that: original $v_{Layers}^{(j)} * Q_m^{(j)} * f^{(j)}$ greater than or equal to 4 is relaxed, for example, relaxed to a first value.

The above feature items may be combined. It is also possible to only operate with peak rate reduction (a bandwidth is maintained at 20M during scheduling).

In some embodiments, the first mode may be an operating mode for R18 eRedcap.

In some embodiments, the first mode may be the operating mode with the peak rate reduction.

In some embodiments, the second mode is different from the first mode, and the second mode is an operating mode with a peak rate increase and/or a larger bandwidth. For example, when the terminal operates in the second mode, a larger bandwidth, such as 20Mhz, is adopted for data scheduling, and the second mode may have the following characteristics.

1) A 20MHz BB bandwidth is used for the PDSCH (for both unicast and broadcast) and the PUSCH, and 20 MHz RF bandwidth is used for UL and DL;

2) Relaxation of the limit condition of the constraint for the peak rate is performed. For example, the condition met may include that: original $v_{Layers}^{(j)} * Q_m^{(j)} * f^{(j)}$ greater than or equal to 4 is relaxed, for example, relaxed to less than 4, that is, to a second value. The second value is not less than the first value.

In some embodiments, the second mode may be an operating mode for R17 Redcap.

In some embodiments, the second mode may be the operating mode with the peak rate increase.

At step S6102, the support status of the network device for terminals with different features, or the network devices indicating that the terminal operates in different operating modes may be broadcast in a system message or notified through dedicated signaling.

In some embodiments, the network broadcasts that its configuration supports R18 eRedcap access, then the network device supports the terminal to operate in the first mode.

In some embodiments, the network broadcasts that its configuration supports R17 eRedcap access, then the network device supports the terminal to operate in the second mode.

In some embodiments, the network device explicitly indicates through a dedicated message (referring to dedicated signaling, such as information carried in a handover command) which operating mode the terminal is expected to operate in.

At step S6103, the specific type of terminal operates in the different modes according to the support of the cell for the terminals with different features, and optionally, may make a decision based on an additional terminal capability.

In some embodiments, if the network device notifies the cell through the first information that it does not support the terminal to operate in the first mode, but supports the terminal to operate in the second mode, and the terminal needs to have the capability of operating in the second mode, then the terminal may operate in the second mode.

In some embodiments, terminal capability information may be added to make a decision on whether to allow access to a R17 Redcap cell (i.e., target cell) in the second mode in a non-connected state. This capability does not need to be reported to the base station, therefore, no terminal capability reporting indication is required.

In some embodiments, an optional feature without a terminal (UE) radio access capability parameter is as shown in Table 1 (first capability support information):

Table 1

Definitions for parameters

Rel-17 Redcap support

It is optional for R18 eRedcap UE to support Rel-17 Redcap feature or to support peak rate increase when camp on in RRC_IDLE or RRC _INACTIVE. A UE that supports this feature shall also support *Peak-datarate-reduction-RedCap-r18.*

In some embodiments, terminal capability information is added to make a decision on whether to allow operating in a R17 Redcap cell (i.e., access to the target cell through handover) in the second operating mode in the connected state. This capability needs to be reported to the base station (second capability support information).

Table 2 below is an embodiment of the second capability support information, for example, the second capability is definitions for related parameters of a supportOfRedCap-r18 terminal.

Table 2

| Definitions for parameters | Granularity (per) | Mandatory Required (M) | Difference between frequency division multiplexing and time division multiplexing (FDD-TDD DIFF) | Difference between FR1 and FR2 (FR1-FR2 DIFF) |
|---|---|---|---|---|
| Indicates whether UE supports peak rate reduction or increase in RRC _CONNECTED. Supporting the peak rate reduction or increase is an optional terminal capability for this terminal. | UE | No | No | No |

As an embodiment, the first capability support information and the second capability indication information have a certain association. For example, a terminal that supports the first capability support information should support the second capability indication information.

In some embodiments, a Rel-18 eRedCap 20M+PR1 terminal may also be defined. Definition of the Rel-18 eRedCap 20M+PR1 terminal may include the following characteristics.

The terminal is a UE with reduced capability.

1) If the cell supports Rel-18 eRedCap, during initial access, the 5MHz BB bandwidth is used only for the PDSCH (for unicast or broadcast) and the PUSCH, and the 20MHz RF bandwidth is used for UL and DL. Here, 5MHz bandwidth may be used for broadcast or unicast of the PDSCH. After initial access, it optionally reports the 20MHz BB bandwidth only for the PDSCH (for unicast or broadcast) and the PUSCH, with the 20MHz RF bandwidth for UL and DL.

Other physical channels and signals are still allowed to use a BWP up to 20MHz, the maximum terminal RF + baseband bandwidth.

The relaxed constraint for the peak rate reduction may include, for example, $vLayers \cdot Qm \cdot f$ equal to 3 or 3.2.

Support of RedCap early indication based on Msg1, MsgA (if UE indicated support for twoStepRACH-r16) (FFS) and/or Msg3 for random access is provided.

2) If the cell does not support R18 eRedcap, a maximum FR1 RedCap terminal bandwidth is 20MHz, or a the maximum FR2 RedCap terminal bandwidth is 100MHz.

3) Support of RedCap early indication based on Msg1, MsgA (if UE indicated support of twoStepRACH-r16) and Msg3/or for random access is provided.

4) A maximum mandatory supported data radio bearer (DRB) number of the terminal is 8.

5) A maximum mandatory supported packet data convergence protocol (PDCP) sequence number (SN) length of the terminal is 12 bits while 18 bits being optional.

6) A mandatory supported radio link control (RLC) acknowledgement mode (AM) SN length is 12 bits while 18 bits being optional.

The terminal may be defined only in FR1, and may support 1RX (receiving communication unit, Receive) or 2RX.

For FR1, 1 DL MIMO layer is supported if 1 receive (Rx) branch is supported, , and 2 DL MIMO layers are supported if 2 Rx branches are supported.

For FR2, either 1 or 2 DL MIMO layers may be supported, while 2 Rx branches are always supported.

For FR1 and FR2, UE features and corresponding capabilities related to more than 2 UE Rx branches or more than 2 DL MIMO layers, as well as UE features and capabilities related to more than 1 UE Tx branch or more than 1 UL MIMO layer are not supported by RedCap terminals.

Table 3 below takes FR1 as an example to provide definitions for related parameters of a supportOfRedCapPR1-r18 terminal.

Table 3

| Definitions for parameters | Granularity or Unit (Per) | Mandatory Required (M) | Difference between frequency division multiplexing and time division multiplexing (FDD-TDD DIFF) |
|---|---|---|---|
| | UE | No | No |

(continued)

| Definitions for parameters | Granularity or Unit (Per) | Mandatory Required (M) | Difference between frequency division multiplexing and time division multiplexing (FDD-TDD DIFF) |
|---|---|---|---|
| *supportOfRedCap-r18 terminal, may have at least the following functions:*<br><br>1) If cell support R18 eRedcap:<br>During initial access, 5 MHz BB bandwidth only for PDSCH (for both unicast and broadcast) and PUSCH, with 20 MHz RF bandwidth for UL and DL capable of being used by the other physical channels;<br>After initial access, optionally report 20 MHz BB bandwidth only for PDSCH (for both unicast and broadcast) and PUSCH, with 20 MHz RF bandwidth for transmission capable of being supported by the other physical channels;<br>The other physical channels and/or signals are still allowed to use a BWP up to the 20 MHz, the maximum BWP bandwidth may be RF bandwidth and/or BB bandwidth supported by UE;<br>Relaxation of the constraint for peak rate may include that<br><br>$$v_{Layers}^{(j)} * Q_m^{(j)} * f^{(j)}$$ is reduce to below 4, such as equal to 3 or 3.2;<br><br>2) If cell not support R18 eRedcap,<br>Maximum FR1 RedCap UE bandwidth is 20 MHz;<br>Maximum FR2 RedCap UE bandwidth is 100 MHz;<br>3) Support of RedCap early indication based on Msgl, MsgA (if UE indicated support of *twoStepRACH-r16*) (FFS) and/or Msg3 for random access;<br>4) Separate initial UL BWP for RedCap UEs;<br>5) Separate initial DL BWP for RedCap UEs;<br>6) Specific RRC-configured DL BWP with cell defining synchronizationsignal block/physical broadcast channel block (CD-SSB) or non-cell defining synchronizationsignal block/physical broadcast channel block (NCD-SSB);<br>7) NCD-SSB based measurements in RRC-configured DL BWP.<br>A terminal reports supportOfRedCapPR1-r18, which means that the above features are supported. | Granularity or Unit (Per) | Conditiona l Selec tion (CY) | Difference between frequency division multiplexing and time division multiplexing (FDD-TDD DIFF) |

In some embodiments, steps S6102 and S6103 may be exchanged in order or executed simultaneously, and steps may be exchanged in order or executed simultaneously.

In some embodiments, at least one of steps S6101 to S6103 may be performed. For example, step S6101 may be implemented as an independent embodiment, step S6102 may be implemented as an independent embodiment, steps S6101+S6102 may be implemented as an independent embodiment, and steps S6101+S6102+S6103 may be implemented as independent embodiments, but are not limited thereto.

In some embodiments, steps S6102 and S6103 are optional, and one or more of these steps may be omitted or replaced in different embodiments.

In some embodiments, step S6103 is optional, and one or more of these steps may be omitted or replaced in different embodiments.

In embodiments of the present invention, part or all of the steps and their optional implementations may be arbitrarily combined with part or all of the steps in other embodiments, or may be arbitrarily combined with optional implementations of other embodiments.

The embodiments of the present invention also propose an apparatus for implementing any of the above methods. For example, an apparatus is proposed, the above apparatus includes units or modules for implementing various steps performed by the terminal in any of the above methods. For another example, an apparatus is proposed, including units or modules for implementing various steps performed by a network device (such as an access network device, a core network function node, a core network device, etc.) in any of the above methods.

It should be understood that the division of the units or modules in the above apparatus is only a division of logical functions, and in an actual implementation, they may be fully or partially integrated into one physical entity, or they may be physically separated. In addition, the units or modules in the apparatus may be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus may be implemented in the form of hardware circuits, and the functions of some or all of the units or modules may be realized by designing the hardware circuits. The above hardware circuits may be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit may be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses may be realized in the form of a processor calling software, or in the form of a hardware circuit, or in part by a processor calling software, and the rest by a hardware circuit.

In embodiments of the present invention, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

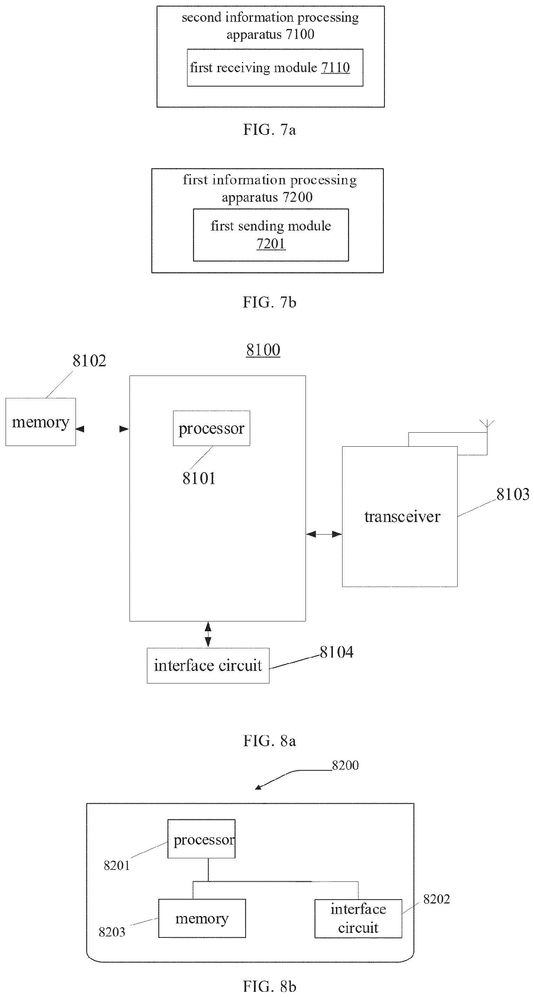

FIG. 7a is a schematic diagram illustrating an architecture of a second information processing apparatus according to an embodiment. As shown in FIG. 7a, the second information processing apparatus 7100 (terminal side) includes: a first receiving module 7101, configured to receive first information of a network device.

In some embodiments, in the second information processing apparatus, a peak rate of the terminal operating in the second mode is higher than a peak rate of the terminal operating in the first mode, and/or a baseband bandwidth for a first channel supported by the terminal operating in the second mode is greater than a baseband bandwidth for the first channel supported by the terminal operating in the first mode.

Optionally, the first receiving module is used to execute the steps related to receiving the first information executed by the terminal 101 in any of the above methods, and details are not repeated here. Optionally, the second information processing apparatus 7100 further includes at least one of a first determination module and a second sending module, and the first determination module is used to execute the steps related to determining whether to operate in the first mode or the second mode, or determining whether to access the target cell, etc. executed by the terminal 101 in any of the above methods, and the second sending module is used to execute the steps related to sending the second information executed by the terminal 101 in any of the above method, and details are not repeated here.

In some embodiments, the first information indicates at least one of: whether a network device supports or expects a terminal to operate in a first mode; or whether a network device supports or expects a terminal to operate in a second mode.

In some embodiments, the first receiving module 701 is further configured to perform at least one of: determining, according to the first information, whether the network device supports or expects the terminal to operate in the first mode; or determining, according to the first information, whether the network device supports or expects the terminal to operate in the second mode.

In some embodiments, a peak rate of the terminal operating in the second mode is higher than a peak rate of the terminal operating in the first mode, and/or a baseband bandwidth for a first channel supported by the terminal operating in the second mode is greater than a baseband bandwidth for the first channel supported by the terminal operating in the first mode.

In some embodiments, the second information processing apparatus 7100 further includes at least one of: a first determination module, configured to determine that the terminal operates in the first mode where the first information indicates that the network device supports or expects the terminal to operate in the first mode; or a second determination module, configured to determine that the terminal operates in the second mode where the first information indicates that the network device does not support the terminal to operate in the first mode, and the first information indicates that the network device supports the terminal to operate in the second mode.

In some embodiments, the second determination module is configured to determine that the terminal operates in the second mode where the first information indicates that the network device does not support the terminal to operate in the first mode, and the first information indicates that the network device supports or expects the terminal to operate in the second mode, and the terminal has a capability of operating in the second mode.

In some embodiments, the second information processing apparatus 7100 further includes a third determination module, configured to determine whether the terminal in a non-connected state accesses to a target cell, in which the target cell is a cell that supports the terminal to operate in the second mode.

In some embodiments, the second information processing apparatus 7100 further includes at least one of: a first processing module, configured to perform the terminal operating in the first mode during an initial access process, and maintaining operating in the first mode after completing the initial access process; a second processing module, configured to perform the terminal operating in the second mode during an initial access process, and switching to operating in the first mode after completing the initial access process; or a third processing module, configured to perform the terminal operating in the first mode during an initial access process, and switching to operating in the second mode after completing the initial access process.

In some embodiments, the first information includes at least one of: a second parameter, in which a value of the second parameter indicates that the terminal supports the first mode or the second mode; a first field, in which the first field indicates whether the network device supports or expects the terminal to operate in the first mode; or a second field, in which the second field indicates whether the network device supports or expects the terminal to operate in the second mode.

In some embodiments, the first receiving module 7101 is configured to perform at least one of: acquiring a system message, in which the system message includes the first information; or acquiring a dedicated message, in which the dedicated message includes the first information.

In some embodiments, the apparatus further includes a second sending module, configured to send second information, in which the second information indicates at least one of: whether the terminal has a capability of operating in the second mode; or whether the terminal supports or expects to operate in the second mode.

In some embodiments, the second sending module is configured to send the second information by the terminal in a connected state.

In some embodiments, the second information indicates at least one of: whether the terminal has a capability of operating in the second mode after initial access; or whether the terminal supports or expects to operate in the second mode after initial access.

In some embodiments, the second information includes at least one of: a first parameter, in which a value of the first parameter indicates that the terminal supports the first mode or the second mode; a third field, in which the third field indicates whether the terminal supports or expects to operate in the second mode; a fourth field, in which the fourth field indicates whether the terminal supports a bandwidth on which the terminal operates in the second mode; or a fifth field, in which the fifth field indicates whether the terminal supports peak rate reduction or increase.

FIG. 7b is a schematic diagram illustrating an architecture of a second information processing apparatus according to an embodiment. As shown in FIG. 7b, the first information processing apparatus 7200 (network device side) includes: a first sending module 7201, configured to send first information to a terminal.

Optionally, the first sending module is used to execute the steps related to sending the first information executed by the network device 102 in any of the above methods, and details are not repeated here. Optionally, the first information processing apparatus 7200 further includes a second receiving module, which is used to execute the steps related to receiving the second information executed by the network device 102 in any of the above methods, and details are not repeated here.

In some embodiments, a peak rate of the terminal operating in the second mode is higher than a peak rate of the terminal operating in the first mode, and/or a baseband bandwidth for a first channel supported by the terminal operating in the second mode is greater than a baseband bandwidth for the first channel supported by the terminal operating in the first mode.

In some embodiments, the first information includes at least one of: a first field, in which the first field indicates whether the network device supports or expects the terminal to operate in the first mode; or a second field, in which the second field indicates whether the network device supports or expects the terminal to operate in the second mode.

In some embodiments, the first information processing apparatus 7200 includes a second receiving module, configured to acquire second information, in which the second information indicates at least one of: whether the terminal has a capability of operating in the second mode; or whether the terminal supports or expects to operate in the second mode.

In some embodiments, the second information indicates at least one of: whether the terminal has a capability of operating in the second mode after initial access; or whether the terminal supports or expects to operate in the second mode after initial access.

In some embodiments, the second receiving module is further configured to acquire the second information reported by the terminal in a connected state.

In some embodiments, the second receiving module is further configured to perform at least one of: acquiring capability information, in which the capability information indicates that the terminal has the capability of operating in the second mode; or acquiring assistance information (UAI), in which the UAI indicates whether the terminal supports or expects to operate in the second mode.

In some embodiments, the second information includes at least one of: a first parameter, in which a value of the first parameter indicates that the terminal supports the first mode or the second mode; a third field, in which the third field indicates whether the terminal supports or expects to operate in the second mode; a fourth field, in which the fourth field indicates whether the terminal supports a bandwidth on which the terminal operates in the second mode; or a fifth field, in which the fifth field indicates whether the terminal supports peak rate reduction or increase.

FIG. 8a is a schematic diagram of a communication device 8100 proposed in an embodiment of the present invention. The communication device 8100 may be a network device (e.g., an access network device, a core network device, etc.), or a terminal (e.g., a user equipment, etc.), or a chip, a chip system, or a processor that supports a network device to implement any of the above methods, or a chip, a chip system, or a processor that supports a terminal to implement any of the above methods. The communication device 8100 may be used to implement the method described in the above method embodiments, and for details, reference may be made to the description in the above method embodiments.

As shown in FIG. 8a, the communication device 8100 includes one or more processors 8101. The processor 8101 may be a general-purpose processor or a dedicated processor, for example, a baseband processor or a central processing unit. The baseband processor may be used to process a communication protocol and communication data, and the central processing unit may be used to control the communication device (such as a base station, a baseband chip, a terminal, a terminal chip, a DU or a CU, etc.) to execute a program and process data of the program. The processor 8101 is used to call instructions so that the communication device 8100 executes any of the above methods.

In some embodiments, the communication device 8100 further includes one or more memories 8102 for storing instructions. Optionally, all or part of the memory 8102 may be outside the communication device 8100.

In some embodiments, the communication device 8100 further includes one or more transceivers 8103. When the communication device 8100 includes one or more transceivers 8103, the communication steps such as sending and receiving in the above methods are performed by the transceiver 8103, and the other steps are performed by the processor 8101.

In some embodiments, the transceiver may include a receiver and a transmitter, and the receiver and the transmitter may be separate or integrated. Optionally, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

Optionally, the communication device 8100 further includes one or more interface circuits 8104, which are connected to the memory 8102. The interface circuit 8104 may be used to receive signals from the memory 8102 or other apparatuses, and may be used to send signals to the memory 8102 or other apparatuses. For example, the interface circuit 8104 may read instructions stored in the memory 8102 and send the instructions to the processor 8101.

The communication device 8100 described in the above embodiments may be a network device or a terminal, but the scope of the communication device 8100 described in the present invention is not limited thereto, and the structure of the communication device 8100 may not be limited by FIG. 8a. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (8) others, etc.

FIG. 8b is a schematic diagram of a chip 8200 proposed in an embodiment of the present invention. In case where the communication device 8100 may be a chip or a chip system, reference may be made to the schematic diagram of the chip 8200 shown in FIG. 8b, but the present invention is not limited thereto.

The chip 8200 includes one or more processors 8201, and the processor 8201 is used to call instructions so that the chip 8200 executes any of the above methods.

In some embodiments, the chip 8200 further includes one or more interface circuits 8202, which are connected to the memory 8203. The interface circuit 8202 may be used to receive signals from the memory 8203 or other apparatuses, and the interface circuit 8202 may be used to send signals to the memory 8203 or other apparatuses. For example, the interface circuit 8202 may read instructions stored in the memory 8203 and send the instructions to the processor 8201. Optionally, the terms such as "interface circuit", "interface", "transceiver pin", and "transceiver" may be exchangeable with each other.

In some embodiments, the chip 8200 further includes one or more memories 8203 for storing instructions. Optionally, all or part of the memory 8203 may be outside the chip 8200.

The present invention also proposes a storage medium, on which instructions are stored, and when the instructions are executed on the communication device 8100, the communication device 8100 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it can also be a temporary storage medium.

The present invention also proposes a program product, which, when executed by the communication device 8100, enables the communication device 8100 to execute any of the above methods. Optionally, the program product is a computer program product.

The present invention also proposes a computer program, which, when executed on a computer, causes the computer to execute any one of the above methods.

**Claims**

1. An information processing method, performed by a terminal, comprising:
   acquiring first information, wherein the first information indicates at least one of:

   whether a network device supports or expects the terminal to operate in a first mode; or
   whether a network device supports or expects the terminal to operate in a second mode.

2. The method according to claim 1, further comprising at least one of:

   determining, according to the first information, whether the network device supports or expects the terminal to operate in the first mode; or
   determining, according to the first information, whether the network device supports or expects the terminal to operate in the second mode.

3. The method according to claim 2, wherein a peak rate of the terminal operating in the second mode is higher than a peak rate of the terminal operating in the first mode, and/or a baseband bandwidth for a first channel supported by the terminal operating in the second mode is greater than a baseband bandwidth for the first channel supported by the terminal operating in the first mode.

4. The method according to any one of claims 1 to 3, further comprising at least one of:

   determining that the terminal operates in the first mode, wherein the first information indicates that the network device supports or expects the terminal to operate in the first mode; or
   determining that the terminal operates in the second mode, wherein the first information indicates that the network device does not support the terminal to operate in the first mode, and the first information indicates that the network device supports the terminal to operate in the second mode.

5. The method according to any one of claims 1 to 4, wherein determining that the terminal operates in the first mode comprises:
   determining that the terminal operates in the second mode, wherein the first information indicates that the network device does not support the terminal to operate in the first mode, and the first information indicates that the network device supports or expects the terminal to operate in the second mode, and the terminal has a capability of operating in the second mode.

6. The method according to any one of claims 1 to 5, further comprising:
   determining whether the terminal in a non-connected state accesses to a target cell, wherein the target cell is a cell that supports the terminal to operate in the second mode.

7. The method according to any one of claims 1 to 6, further comprising at least one of:

the terminal operating in the first mode during an initial access process, and maintaining operating in the first mode after completing the initial access process;
the terminal operating in the second mode during an initial access process, and switching to operating in the first mode after completing the initial access process; or
the terminal operating in the first mode during an initial access process, and switching to operating in the second mode after completing the initial access process.

8. The method according to any one of claims 1 to 7, wherein the first information comprises at least one of:

a first field, wherein the first field indicates whether the network device supports or expects the terminal to operate in the first mode; or
a second field, wherein the second field indicates whether the network device supports or expects the terminal to operate in the second mode.

9. The method according to any one of claims 1 to 8, wherein acquiring the first information comprises at least one of:

acquiring a system message, wherein the system message comprises the first information; or
acquiring a dedicated message, wherein the dedicated message comprises the first information.

10. The method according to any one of claims 1 to 9, further comprising:
sending second information, wherein the second information indicates at least one of:

whether the terminal has a capability of operating in the second mode; or
whether the terminal supports or expects to operate in the second mode.

11. The method according to claim 10, wherein sending the second information comprises:
reporting the second information by the terminal in a connected state.

12. The method according to claim 11, wherein the second information indicates at least one of:

whether the terminal has a capability of operating in the second mode after initial access; or
whether the terminal supports or expects to operate in the second mode after initial access.

13. The method according to any one of claims 10 to 12, wherein sending the second information comprises at least one of:

sending capability information, wherein the capability information indicates that the terminal has the capability of operating in the second mode; or
sending UE assistance information (UAI), wherein the UAI indicates whether the terminal supports or expects to operate in the second mode.

14. The method according to any one of claims 10 to 13, wherein the second information comprises at least one of:

a first parameter, wherein a value of the first parameter indicates that the terminal supports the first mode or the second mode;
a third field, wherein the third field indicates whether the terminal supports or expects to operate in the second mode;
a fourth field, wherein the fourth field indicates whether the terminal supports a bandwidth on which the terminal operates in the second mode; or
a fifth field, wherein the fifth field indicates whether the terminal supports peak rate reduction or increase.

15. An information processing method, performed by a network device, comprising:
sending first information, wherein the first information indicates at least one of:

whether the network device supports or expects a terminal to operate in a first mode; or
whether the network device supports or expects a terminal to operate in a second mode.

16. The method according to claim 15, wherein a peak rate of the terminal operating in the second mode is higher than a peak rate of the terminal operating in the first mode, and/or a baseband bandwidth for a first channel supported by the terminal operating in the second mode is greater than a baseband bandwidth for the first channel supported by the terminal operating in the first mode.

17. The method according to claim 15 or 16, wherein the first information comprises at least one of:

a first field, wherein the first field indicates whether the network device supports or expects the terminal to operate in the first mode; or
a second field, wherein the second field indicates whether the network device supports or expects the terminal to operate in the second mode.

18. The method according to any one of claims 15 to 7, wherein sending the first information comprises at least one of:

sending a system message, wherein the system message comprises the first information; or
sending a dedicated message, wherein the dedicated message comprises the first information.

19. The method according to any one of claims 15 to 18, further comprising:
acquiring second information, wherein the second information indicates at least one of:

whether the terminal has a capability of operating in the second mode; or
whether the terminal supports or expects to operate in the second mode.

20. The method according to any one of claims 15 to 19, wherein the second information indicates at least one of:

whether the terminal has a capability of operating in the second mode after initial access; or
whether the terminal supports or expects to operate in the second mode after initial access.

21. The method according to claim 15 or 20, wherein acquiring the second information comprises:
acquiring the second information reported by the terminal in a connected state.

22. The method according to any one of claims 15 to 21, wherein acquiring the second information comprises at least one of:

acquiring capability information, wherein the capability information indicates that the terminal has the capability of operating in the second mode; or
acquiring UE assistance information (UAI), wherein the UAI indicates whether the terminal supports or expects to operate in the second mode.

23. The method according to any one of claims 15 to 22, wherein the second information comprises at least one of:

a first parameter, wherein a value of the first parameter indicates that the terminal supports the first mode or the second mode;
a third field, wherein the third field indicates whether the terminal supports or expects to operate in the second mode;
a fourth field, wherein the fourth field indicates whether the terminal supports a bandwidth on which the terminal operates in the second mode; or
a fifth field, wherein the fifth field indicates whether the terminal supports peak rate reduction or increase.

24. An information processing method, configured in a communication system, comprising:

sending, by a network device, first information to a terminal; and
receiving, by the terminal, the first information from the network device, wherein the first information indicates at least one of:

whether the network device supports or expects the terminal to operate in a first mode; or
whether the network device supports or expects the terminal to operate in a second mode.

25. A first information processing apparatus, comprising:
a first sending module, configured to send first information, wherein the first information indicates at least one of:

whether a network device supports or expects a terminal to operate in a first mode; or
whether a network device supports or expects a terminal to operate in a second mode.

26. A second information processing apparatus, comprising:
a first receiving module, configured to receive first information, wherein the first information indicates at least one of:

whether a network device supports or expects a terminal to operate in a first mode; or
whether a network device supports or expects a terminal to operate in a second mode.

27. A communication device, comprising a processor, a transceiver, a memory, and an executable program stored in the memory and capable of being run by the processor, wherein the processor is configured to perform the information processing method according to any one of claims 1 to 9 or the information processing method according to any one of claims 10 to 22 when running the executable program.

28. A communication system comprising a terminal and a network device, wherein the terminal is configured to implement the information processing method according to any one of claims 1 to 9, and the network device is configured to implement the information processing method according to any one of claims 10 to 22.

29. A storage medium storing instructions which, when running on a communication device, cause the communication device to perform the information processing method according to any one of claims 1 to 9, or the information processing method according to any one of claims 10 to 22.

Communication system 100

| Terminal 101 |——| Network device 102 |

FIG. 1

terminal

network device

S2101, sending first information

S2102, determining to operate in the first mode or the second mode

S2103, sending second information

FIG. 2

S3101, acquiring first information

S3102, determining to operate in a first mode or a second mode

S3103, sending second information

FIG. 3a

S3201, sending second information

↓

S3202, acquiring first information

↓

S3203, determining to operate in a second mode

FIG. 3b

S3301, acquiring first information

↓

S3302, determining to operate in a first mode

↓

S3303, sending second information

FIG.3c

S3401, acquiring first information

↓

S3402, determining to operate in a first mode or a second mode

FIG. 3d

S3501, acquiring first information

FIG. 3e

S4101, sending first information

↓

S4102, acquiring second information

FIG. 4a

S4201, sending first information

FIG. 4b

Terminal

Network device

S5101, sending first information

S5102, receiving first information

FIG. 5

S6101, a specific type of terminal operates in different operating modes according to a support of a cell for different features or according to an indication of a network device

S6102, the support status of the network device for terminals with different features, or the network devices indicating that the terminal operates in different operating modes may be broadcast in a system message or notified through dedicated signaling

S6103, the specific type of terminal operates in the different modes according to the support of the cell for the terminals with different features, and optionally, may make a decision based on an additional terminal capability

FIG. 6

second information processing
apparatus 7100

first receiving module 7110

FIG. 7a

first information processing
apparatus 7200

first sending module
7201

FIG. 7b

<u>8100</u>

8102

memory

processor

8101

transceiver

8103

interface circuit — 8104

FIG. 8a

8200

processor

8201

memory

8203

interface
circuit

8202

FIG. 8b

## INTERNATIONAL SEARCH REPORT

| International application No. |
|---|
| **PCT/CN2023/086748** |

### A. CLASSIFICATION OF SUBJECT MATTER

H04W28/20(2009.01)i;  H04W28/22(2009.01)i

According to International Patent Classification (IPC) or to both national classification and IPC

### B. FIELDS SEARCHED

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, ENTXTC, EXTXT, VEN, 3GPP: 能力缩减, 轻量化, 低成本, 低能力, 窄带, 终端, 设备, 模式, 类型, 支持, 允许, 能够, 期望, 速率, 带宽, RedCap, eRedcap, reduced capability, NB, UE, terminal, MT, mode, type, support, allow, bandwidth, speed

### C. DOCUMENTS CONSIDERED TO BE RELEVANT

| Category* | Citation of document, with indication, where appropriate, of the relevant passages | Relevant to claim No. |
|---|---|---|
| X | CN 110463258 A (BEIJING XIAOMI MOBILE SOFTWARE CO., LTD.) 15 November 2019 (2019-11-15) <br> description, paragraphs 82-178 | 1-29 |
| X | CN 111345072 A (BEIJING XIAOMI MOBILE SOFTWARE CO., LTD.) 26 June 2020 (2020-06-26) <br> description, paragraphs 88-199 | 1-3, 15, 16, 24-29 |
| X | KR 20210122716 A (SAMSUNG ELECTRONICS CO., LTD.) 12 October 2021 (2021-10-12) <br> description, paragraphs 6-11 | 1-3, 15, 16, 24-29 |
| X | WO 2016119261 A1 (HUAWEI TECHNOLOGIES CO., LTD.) 04 August 2016 (2016-08-04) <br> description, pages 1-11 | 1-3, 15, 16, 24-29 |
| A | CN 115334648 A (HUAWEI TECHNOLOGIES CO., LTD.) 11 November 2022 (2022-11-11) <br> entire document | 1-29 |
| A | CN 115606291 A (BEIJING XIAOMI MOBILE SOFTWARE CO., LTD.) 13 January 2023 (2023-01-13) <br> entire document | 1-29 |

☑ Further documents are listed in the continuation of Box C.     ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **26 October 2023** | **14 November 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/086748** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2023023604 A1 (QUALCOMM INC.) 23 February 2023 (2023-02-23) entire document | 1-29 |

Form PCT/ISA/210 (second sheet) (July 2022)

## INTERNATIONAL SEARCH REPORT
### Information on patent family members

International application No.

**PCT/CN2023/086748**

| Patent document cited in search report | | | Publication date (day/month/year) | Patent family member(s) | | | Publication date (day/month/year) |
|---|---|---|---|---|---|---|---|
| CN | 110463258 | A | 15 November 2019 | WO | 2020258329 | A1 | 30 December 2020 |
| | | | | US | 2022272581 | A1 | 25 August 2022 |
| CN | 111345072 | A | 26 June 2020 | WO | 2021159492 | A1 | 19 August 2021 |
| | | | | US | 2023075764 | A1 | 09 March 2023 |
| KR | 20210122716 | A | 12 October 2021 | WO | 2021201611 | A1 | 07 October 2021 |
| WO | 2016119261 | A1 | 04 August 2016 | EP | 3244649 | A1 | 15 November 2017 |
| | | | | US | 2017332325 | A1 | 16 November 2017 |
| | | | | KR | 20170108100 | A | 26 September 2017 |
| | | | | JP | 2018504066 | A | 08 February 2018 |
| | | | | EP | 3582535 | A1 | 18 December 2019 |
| | | | | CN | 106605425 | A | 26 April 2017 |
| | | | | CN | 109743773 | A | 10 May 2019 |
| | | | | JP | 2019088030 | A | 06 June 2019 |
| | | | | CN | 110113806 | A | 09 August 2019 |
| | | | | JP | 2020078094 | A | 21 May 2020 |
| CN | 115334648 | A | 11 November 2022 | WO | 2022237735 | A1 | 17 November 2022 |
| CN | 115606291 | A | 13 January 2023 | WO | 2022222145 | A1 | 27 October 2022 |
| WO | 2023023604 | A1 | 23 February 2023 | US | 2023054786 | A1 | 23 February 2023 |

Form PCT/ISA/210 (patent family annex) (July 2022)